# EUROPÄISCHE PATENTSCHRIFT

(11) **EP 3 250 576 B1**
(45) Veröffentlichungstag und Bekanntmachung des Hinweises auf die Patenterteilung: **20.07.2022**
(21) Anmeldenummer: 16701449.7
(22) Anmeldetag: 22.01.2016
(51) Int. Cl.: C07F 3/06, C08L 83/04

(54) **ORGANISCHE ZINKKOMPLEXE ALS KATALYSATOREN FÜR KONDENSATIONSREAKTIONEN**
ORGANIC ZINC COMPLEXES AS CATALYSTS FOR CONDENSATION REACTIONS
COMPLEXES DE ZINC ORGANIQUES UTILISÉS COMME CATALYSEURS POUR DES RÉACTIONS DE CONDENSATION

(30) Priorität: 26.01.2015 DE 102015201292
(43) Veröffentlichungstag der Anmeldung: 06.12.2017
(73) Patentinhaber: Henkel AG & Co. KGaA, 40589 Düsseldorf (DE)
(72) Erfinder: GUTACKER, Andrea, 40597 Düsseldorf (DE); UNGER, Kerstin, 46049 Oberhausen (DE); KLEIN, Johann, 40593 Düsseldorf (DE); BOUDET, Helene, 40721 Hilden (DE); KRAGL, Udo, 18298 Kritzmow (DE); LUND, Henrik, 18059 Rostock (DE); MEJIA, Esteban, 18059 Rostock (DE); BAUMGARD, Jens, 18057 Rostock (DE)
(86) Internationale Anmeldenummer: PCT/EP2016/051271
(87) Internationale Veröffentlichungsnummer: WO 2016/120153

(56) Entgegenhaltungen:
- EP-A1- 0 564 253
- EP-A1- 2 774 672
- WO-A1-2012/064611
- CN-A- 101 723 966
- KIMBERLY A. GERLING ET AL: "Synthesis and structures of bis-ligated zinc complexes supported by tridentate ketoimines that initiate L-lactide polymerization", DALTON TRANSACTIONS: THE INTERNATIONAL JOURNAL FOR INORGANIC, ORGANOMETALLIC AND BIOINORGANIC CHEMISTRY, Bd. 43, Nr. 43, 26. September 2014 (2014-09-26), Seiten 16498-16508, XP055264938, GB ISSN: 1477-9226, DOI: 10.1039/C4DT01607F
- A. D. GARNOVSKII ET AL: "Tribochemically active chelate complexes of salicylideneimines", RUSSIAN JOURNAL OF COORDINATION CHEMISTRY, Bd. 35, Nr. 2, 1. Februar 2009 (2009-02-01), Seiten 120-127, XP055266055, US ISSN: 1070-3284, DOI: 10.1134/S1070328409020067
- ESIN ISPIR ET AL: "The d 10 Metal Chelates Derived from Schiff Base Ligands Having Silane: Synthesis, Characterization, and Antimicrobial Studies of Cadmium(II) and Zinc(II) Complexes", SYNTHESIS AND REACTIVITY IN INORGANIC, METAL-ORGANIC NANO-METAL CHEMISTRY, Bd. 36, Nr. 8, 1. September 2006 (2006-09-01), Seiten 627-631, XP055265565, US ISSN: 1553-3174, DOI: 10.1080/15533170600910553
- STARIKOV A G ET AL: "Effect of ligand environment on the mechanism of enantiomerization of BeII, ZnII, and CuII bischelate complexes", RUSSIAN CHEMICAL BULLETIN, KLUWER ACADEMIC PUBLISHERS-PLENUM PUBLISHERS, NE, Bd. 58, Nr. 3, 1. April 2010 (2010-04-01), Seiten 513-521, XP019794858, ISSN: 1573-9171
- JUDY AZAR AMIR REZA ET AL: "Novel magnetic nanomaterials: Synthesis, characterization and study of their catalytic application", MATERIALS CHEMISTRY AND PHYSICS, Bd. 168, 20. November 2015 (2015-11-20), Seiten 85-94, XP029358613, ISSN: 0254-0584, DOI: 10.1016/J.MATCHEMPHYS.2015.11.004
- MIRELA-FERNANDA ZALTARIOV ET AL: "Synthesis, characterization and antimicrobial activity of new Cu(II) and Zn(II) complexes with Schiff bases derived from trimethylsilyl-propyl-p-aminobenzoate", POLYHEDRON., Bd. 100, 1. November 2015 (2015-11-01), Seiten 121-131, XP055265525, GB ISSN: 0277-5387, DOI: 10.1016/j.poly.2015.07.030

## Beschreibung

Die Erfindung betrifft ein Verfahren zur Herstellung eines härtbaren Polymers, insbesondere eines Polyorganosiloxans unter Verwendung organische Zinkverbindungen, die als Katalysatoren für die Kondensation von Silizium-haltigen Polymeren und Polymermischungen nützlich sind, und die bekannten, hochreaktiven Organolithiumverbindungen ersetzen können. Die beschriebenen Zinkverbindungen zeichnen sich durch gute katalytische Aktivität und Stabilität aus. Weiterhin werden Verwendungen dieser Zinkverbindungen beschrieben.

Silikonpolymere, insbesondere Polymethylsiloxane wie Polydimethylsiloxan (PDMS), haben große Bedeutung in Kleb-, Dicht- und Isolierstoffen. Unter diesen machen solche, die bei niedrigen Temperaturen und unter Umgebungsbedingungen vulkanisieren, einen nicht unerheblichen Marktanteil aus. Typische Formulierungen enthalten ein reaktives Polyorganosiloxan, das durch die Reaktion eines Silanol-terminierten Polyorganosiloxans mit einem Silan-Verkappungsmittel hergestellt wurde. Für diese Endgruppenverkappung (endcapping) werden typischerweise Katalysatoren benötigt, die selektiv die Endgruppenverkappung vermitteln ohne gleichzeitig das Polyorganosiloxan zu härten. Bisher wurden für die Endgruppenverkappung vor allem organische Lithium-Verbindungen, beispielsweise die in EP 0 564 253 B1 offenbarten Organolithiumverbindungen, eingesetzt, die gute Ergebnisse im Hinblick auf Aushärtungszeit und Selektivität liefern. Allerdings sind diese Verbindungen aus Gründen der Stabilität nachteilig, da sie die Formulierungen instabil machen, wenn sie nicht aufwendig entfernt oder zersetzt werden. EP 2 774 672 A1 beschreibt einen Katalysator für die Vernetzung von Siliconkautschukmassen mit einem Vernetzer auf Basis einer Silanverbindung mit Lactatgruppen, wobei der Katalysator mindestens zwei voneinander verschiedene Verbindungen umfasst, die unabhängig voneinander aus Metallsalzen von Carbonsäuren ausgewählt werden. WO 2012/064611 A1 beschreibt einen Kondensationshärtungskatalysator auf Basis eines Metallchelats, wobei das Metall ausgewählt ist aus der Gruppe bestehend aus Blei, Zinn, Zirconium, Antimon, Eisen, Cadmium, Barium, Mangan, Zink, Kobalt, Nickel, Aluminium, Gallium, Germanium und Titan.

Obwohl als Ersatz für die bekannten Lithium-Verbindungen verschiedenste andere Katalysatoren bekannt sind, wie z.B. Amine, anorganische Oxide, Kaliumacetat, Organotitanderivate, Titan/Amin-Kombinationen, Carbonsäure/Amin-Kombinationen sowie Carbamate und Oxim-enthaltende organische Verbindungen, haben diese bekannten Alternativen oftmals Nachteile im Hinblick auf die Stabilität, Aktivität oder Kompatibilität.

Es ist daher eine Aufgabe der vorliegenden Erfindung Alternativen zu den als Kondensationsmitteln bekannten Organolithiumverbindungen bereitzustellen, die die bekannten Nachteile überwinden.

Die vorliegende Erfindung löst die Aufgabe verbesserte Kondensationsmitteln für das Endgruppenverkappen von Polymeren, die reaktive Silanolgruppen (Si-OH Gruppen) enthalten, bereitzustellen, die die oben beschriebenen Anforderungen erfüllen, d.h. eine ausreichende katalytische Aktivität und Stabilität aufweisen und mit den verwendeten Komponenten kompatibel sind. Die Erfinder haben nämlich überraschenderweise herausgefunden, dass Zinkkomplexe mit β-Ketoimin-Liganden die gewünschten Eigenschaften aufweisen, und daher als Kondensationskatalysatoren für die Endgruppenverkappung von Silanolgruppen-terminierten Polymeren geeignet sind.

In einem ersten Aspekt betrifft die Erfindung daher ein Verfahren zur Herstellung eines härtbaren Polymers, insbesondere eines Polyorganosiloxans, enthaltend mindestens eine, an eine Siliziumatom gebundene, endständige funktionelle Gruppe, umfassend das Umsetzen eines Silanol-terminierten Polymers, insbesondere Polydiorganosiloxans, mit mindestens einer Verbindung der Formel (2)

(R¹⁰)ₖ(R¹¹)ₘSi(R¹²)₄₋₍ₖ₊ₘ₎ (2),

wobei
jedes R¹⁰ für einen Kohlenwasserstoffrest mit 1 bis 20 C-Atomen steht oder eine Triorganosiloxan-Gruppe der Formel -O-Si(R¹³)₃, wobei jedes R¹³ unabhängig für einen Kohlenwasserstoffrest mit 1 bis 20 C-Atomen steht;
jedes R¹¹ für eine funktionelle Gruppe der Formel -(L)ₙ-(F)ₒ steht, wobei L ein divalenter oder trivalenter Kohlenwasserstoffrest ist, der optional ein oder mehrere Heteroatome, insbesondere Sauerstoffatome enthält, F ein ungesättigter C₂₋₆ Kohlenwasserstoffrest, Halogen, ein perfluorierter Kohlenwasserstoffrest, Glycidoxy, -NHR¹⁴ oder -O-C(O)-CR¹⁵=CR¹⁶R¹⁷ ist, wobei R¹⁴ Wasserstoff, C₁₋₆ Alkyl oder L-NH₂ ist, R¹⁵, R¹⁶ und R¹⁷ unabhängig Wasserstoff, C₁₋₆ Alkyl oder Phenyl sind, n 0 oder 1 und o 1 oder 2 ist;
jedes R¹² unabhängig für eine Hydroxy- oder eine hydrolysierbare Gruppe stehen, insbesondere eine Oxim- oder/und Alkoxygruppe;
k 0, 1, 2 oder 3 ist;
m 0 oder 1 ist, wobei k+m = 0, 1, 2 oder 3 ist, mit der Maßgabe, dass wenn k+m=3 ist, m nicht 0 ist; in Gegenwart eines Katalysators, wobei der Katalysator mindestens einen Zinkkomplex der Formel (1) enthält: 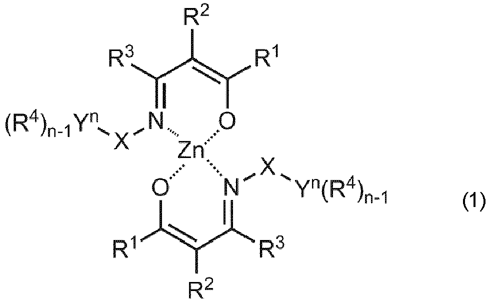 wobei
jedes R¹, R² und R³ unabhängig steht für:
   Wasserstoff;
   einen substituierten oder unsubstituierten Alkyl-, Alkenyl- oder Alkinylrest;
   einen substituierten oder unsubstituierten cycloaliphatischen Rest oder Arylrest;
   einen substituierten oder unsubstituierten heteroalicyclischen Rest oder Heteroarylrest;
   -OR⁵, -SR⁵, -N(R⁵)₂, -Si(R⁵)₃ oder -P(R⁵)₃;
   oder R¹ und R² oder R² und R³ zusammen mit den Kohlenstoffatomen, an die sie gebunden sind, einen 5- bis 8-gliedrigen, substituierten oder unsubstituierten cycloaliphatischen, heteroalicyclischen, Aryl- oder Heteroarylring bilden;
jedes X unabhängig für einen divalenten Rest steht, der ausgewählt wird aus:
   einem substituierten oder unsubstituierten Alkyl-, Alkenyl- oder Alkinylrest;
   einem substituierten oder unsubstituierten cycloaliphatischen Rest oder Arylrest;
   einem substituierten oder unsubstituierten heteroalicyclischen Rest oder Heteroarylrest;
jedes Yⁿ unabhängig steht für C, Si, Ge, N, P, O, S, wobei n den Oxidationszustand oder die Valenz angibt;
jedes R⁴ unabhängig steht für:
   Wasserstoff;
   einen substituierten oder unsubstituierten Alkyl-, Alkenyl- oder Alkinylrest;
   einen substituierten oder unsubstituierten cycloaliphatischen Rest oder Arylrest;
   einen substituierten oder unsubstituierten heteroalicyclischen Rest oder Heteroarylrest;
   -OR⁵, -SR⁵, -N(R⁵)₂, -Si(R⁵)3 oder -P(R⁵)₃; oder
   zwei R⁴ zusammen mit Yⁿ einen 5- bis 8-gliedrigen, substituierten oder unsubstituierten cycloaliphatischen, heteroalicyclischen, Aryl- oder Heteroarylring bilden mit der Maßgabe, dass
      (1) wenn Yⁿ O oder S ist, R⁴ nicht -OR⁵, -SR⁵ oder -N(R⁵)₂ ist;
      (2) wenn Yⁿ Si, Ge oder P ist, R⁴ nicht H, -Si(R⁵)3 oder -P(R⁵)₃ ist;
jedes R⁵ unabhängig steht für
   Wasserstoff;
   einen substituierten oder unsubstituierten Alkyl-, Alkenyl- oder Alkinylrest;
   einen substituierten oder unsubstituierten cycloaliphatischen Rest oder Arylrest;
   einen substituierten oder unsubstituierten heteroalicyclischen Rest oder Heteroarylrest; und jedes n unabhängig eine ganze Zahl von 1 bis 4, insbesondere 2, 3 oder 4 ist,
   wobei substituierter Alkyl-, Alkenyl- oder Alkinylrest bedeutet, dass ein oder mehrere Kohlenstoffatom(e) und/oder Wasserstoffatom(e) des Alkyl-, Alkenyl- oder Alkinylrests durch Heteroatome, ausgewählt aus O, S, N und Si, oder funktionelle Gruppen ausgewählt aus =O, =S, -OH, -SH, -NH₂ -NO₂, -CN, -F, -Cl, -Br, -I, -OCN, -NCO, C₃₋₈ Cycloalkyl, C₆₋₁₄Aryl, einem 5-10 gliedrigen Heteroarylring, in dem 1 bis 4 Ringatome unabhängig Stickstoff, Sauerstoff oder Schwefel sind, und einem 5-10 gliedrigen heteroalicyclischen Ring, in dem 1 bis 3 Ringatome unabhängig Stickstoff, Sauerstoff oder Schwefel sind, ersetzt sind; und
   substituierter cycloaliphatischer Rest, Arylrest, heteroalicyclischer Rest oder Heteroarylrest bedeutet, dass ein oder mehrere Wasserstoffatom(e) des cycloaliphatischen Rests, Arylrests, heteroalicyclischen Rests oder Heteroarylrests durch funktionelle Gruppen, ausgewählt aus =O, =S, -OH, -SH, -NH₂ -NO₂, -CN, -F, -Cl, -Br, -I, -OCN, -NCO, C₁₋₁₀ Alkyl, C₂₋₁₀ Alkenyl, C₂₋₁₀ Alkinyl, C₃₋₈ Cycloalkyl, C₆₋₁₄ Aryl, einem 5-10 gliedrigen Heteroarylring in dem 1 bis 4 Ringatome unabhängig Stickstoff, Sauerstoff oder Schwefel sind, und einem 5-10 gliedrigen heteroalicyclischen Ring in dem 1 bis 3 Ringatome unabhängig Stickstoff, Sauerstoff oder Schwefel sind, ersetzt sind.

In einem weiteren Aspekt betrifft die Erfindung die Verwendung eines Zinkkomplexes wie hierin beschrieben als Katalysator zur Katalyse der Kondensationsreaktion von Organosiliziumverbindungen. Mit dem Begriff "Katalysator", wie hierin im Zusammenhang mit den erfindungsgemäßen Zinkverbindungen verwendet, wird eine Verbindung bezeichnet, die die für die Endgruppenverkappung von Organosiliziumverbindungen erforderliche Kondensationsreaktion vermitteln kann, ohne aber die Polymer auszuhärten. Katalysatoren, die die eigentliche Aushärtung vermitteln, werden hierin als "Vulkanisationskatalysatoren" bezeichnet.

Sofern in der vorliegenden Anmeldung auf Molekulargewichte Bezug genommen wird, beziehen sich die Angaben, sofern nicht anders angegeben, auf das Gewichtsmittel, d.h. den M_{w}-Wert, und nicht das arithmetische Mittel. Das Molekulargewicht wird mittels Gelpermeationschromatographie (GPC) mit Tetrahydrofuran (THF) als Eluent nach DIN 55672-1:2007-08 bestimmt, vorzugsweise bei 35 °C.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polymer" bedeutet somit beispielsweise mindestens eine Art von Polymer, d.h. dass eine Art von Polymer oder eine Mischung mehrerer verschiedener Polymere verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

In den Verbindungen der Formel (1) steht jedes R¹, R² und R³ unabhängig für:
Wasserstoff;
einen substituierten oder unsubstituierten Alkyl-, Alkenyl- oder Alkinylrest, insbesondere mit 1 bis 10 Kohlenstoffatomen;
einen substituierten oder unsubstituierten cycloaliphatischen Rest oder Arylrest, insbesondere mit 6 bis 10 Kohlenstoffatomen;
einen substituierten oder unsubstituierten, insbesondere 5-6-gliedrigen heteroalicyclischen Rest oder Heteroarylrest, insbesondere mit 3 bis 10 Kohlenstoffatomen und 1 bis 4 Heteroatomen ausgewählt aus O, S und N;
-OR⁵, -SR⁵, -N(R⁵)₂, -Si(R⁵)₃ oder -P(R⁵)₃;
oder R¹ und R² oder R² und R³ bilden zusammen mit den Kohlenstoffatomen, an die sie gebunden sind, einen 5- bis 8-gliedrigen, substituierten oder unsubstituierten cycloaliphatischen, heteroalicyclischen, Aryl- oder Heteroarylring.

"Alkyl", wie hierin verwendet, bezieht sich auf einen gesättigten aliphatischen Kohlenwasserstoff einschließlich geradkettiger und verzweigtkettiger Gruppen. Vorzugsweise besitzt die Alkylgruppe 1 bis 10 Kohlenstoffatome (wenn ein numerischer Bereich z.B. "1-10" hierin angegeben wird, ist gemeint, dass diese Gruppe, in diesem Fall die Alkylgruppe, 1 Kohlenstoffatom, 2 Kohlenstoffatome, 3 Kohlenstoffatome etc. bis zu einschließlich 10 Kohlenstoffatome besitzen kann). Insbesondere kann es sich bei dem Alkyl um ein mittleres Alkyl, das 1 bis 6 Kohlenstoffatome besitzt, oder ein Niederalkyl, das 1 bis 4 Kohlenstoffatome besitzt z.B. Methyl, Ethyl, n-Propyl, Isopropyl, Butyl, iso-Butyl, tert-Butyl etc., handeln. Die Alkylreste können substituiert oder unsubstituiert sein. _{"}Substituiert", wie in diesem Zusammenhang verwendet, bedeutet, dass ein oder mehrere Kohlenstoffatom(e) und/oder Wasserstoffatom(e) des Alkylrests durch Heteroatome oder funktionelle Gruppen ersetzt sind. Durch das Ersetzen eines oder mehrerer Kohlenstoffatome durch Heteroatome werden Heteroalkylgruppen erhalten, in denen 1 oder mehrere Kohlenstoffatome durch Heteroatome, insbesondere ausgewählt aus O, S, N und Si, ersetzt sind. Beispiele für solche Heteroalkylgruppen sind, ohne Einschränkung, Methoxymethyl, Ethoxyethyl, Propoxypropyl, Methoxyethyl, Isopentoxypropyl, Ethylaminoethyl, Trimethoxypropylsilyl, etc. Funktionelle Gruppen, die Wasserstoffatome ersetzen können, werden insbesondere ausgewählt aus =O, =S, -OH, -SH, -NH₂ -NO₂, -CN, -F, -Cl, -Br, -I, -OCN, -NCO, C₃₋₈ Cycloalkyl, C₆₋₁₄ Aryl, einem 5-10 gliedrigen Heteroarylring, in dem 1 bis 4 Ringatome unabhängig Stickstoff, Sauerstoff oder Schwefel sind, und einem 5-10 gliedrigen heteroalicyclischen Ring, in dem 1 bis 3 Ringatome unabhängig Stickstoff, Sauerstoff oder Schwefel sind.

"Alkenyl", wie hierin verwendet, bezieht sich auf eine Alkylgruppe, wie hierin definiert, die aus mindestens zwei Kohlenstoffatomen und mindestens einer Kohlenstoff-Kohlenstoff-Doppelbindung besteht, z.B. Ethenyl, Propenyl, Butenyl oder Pentenyl und deren strukturelle Isomere wie 1- oder 2-Propenyl, 1-, 2-, oder 3-Butenyl, etc. Alkenylgruppen können substituiert oder unsubstituiert sein. Wenn sie substituiert sind, sind die Substituenten wie oben für Alkyl definiert.

"Alkinyl", wie hierin verwendet, bezieht sich auf eine Alkylgruppe, wie hierin definiert, die aus mindestens zwei Kohlenstoffatomen und mindestens einer Kohlenstoff-Kohlenstoff-Dreifachbindung besteht, z. B. Ethinyl (Acetylen), Propinyl, Butinyl oder Petinyl und deren strukturelle Isomere wie oben beschrieben. Alkinylgruppen können substituiert oder unsubstituiert sein. Wenn sie substituiert sind, sind die Substituenten wie oben für Alkyl definiert.

Ein "cycloaliphatischer Rest" oder "Cycloalkylgruppe" , wie hierin verwendet, bezieht sich auf monocyclische oder polycyclische (mehrere Ringe, die gemeinsame Kohlenstoffatome besitzen) Gruppen, insbesondere aus 3-8 Kohlenstoffatomen, in denen der Ring kein vollständiges konjugiertes pi-Elektronensystem besitzt, z.B. Cyclopropyl, Cyclobutyl, Cyclopentyl, Cyclohexyl, Cyclobutenyl, Cyclopentenyl, Cyclohexenyl, etc. Cycloalkylgruppen können substituiert oder unsubstituiert sein. "Substituiert", wie in diesem Zusammenhang verwendet, bedeutet, dass ein oder mehrere Wasserstoffatom(e) des Cycloalkylrests durch funktionelle Gruppen ersetzt sind. Funktionelle Gruppen, die Wasserstoffatome ersetzen können, werden insbesondere ausgewählt aus =O, =S, -OH, -SH, -NH₂ -NO₂, -CN, -F, -Cl, -Br, -I, -OCN, -NCO, C₁₋₁₀ Alkyl, C₂₋₁₀ Alkenyl, C₂₋₁₀ Alkinyl, C₃₋₈ Cycloalkyl, C₆₋₁₄Aryl, einem 5-10 gliedrigen Heteroarylring in dem 1 bis 4 Ringatome unabhängig Stickstoff, Sauerstoff oder Schwefel sind, und einem 5-10 gliedrigen heteroalicyclischen Ring in dem 1 bis 3 Ringatome unabhängig Stickstoff, Sauerstoff oder Schwefel sind.

"Aryl", wie hierin verwendet, bezieht sich auf monocyclische oder polycyclische (d.h. Ringe, die benachbarte Kohlenstoffatompaare gemeinsam haben) Gruppen, aus insbesondere 6 bis 14 Kohlenstoffringatomen die ein vollständiges konjugiertes pi-Elektronensystem besitzen. Beispiele für Arylgruppen sind Phenyl, Naphthalinyl und Anthracenyl. Arylgruppen können substituiert oder unsubstituiert sein. Wenn sie substituiert sind, sind die Substituenten wie oben für Cycloalkyl definiert.

Eine "Heteroaryl"-Gruppe, wie hierin verwendet, bezieht sich auf einen monocyclischen oder polycyclische (d.h. Ringe, die sich ein benachbartes Ringatompaar teilen) aromatischen Ring, aus insbesondere 5 bis 10 Ringatomen, wobei ein, zwei, drei oder vier Ringatome Stickstoff, Sauerstoff oder Schwefel sind und der Rest Kohlenstoff ist. Beispiele für Heteroarylgruppen sind Pyridyl, Pyrrolyl, Furyl, Thienyl, Imidazolyl, Oxazolyl, Isoxazolyl, Thiazolyl, Isothiazolyl, Pyrazolyl, 1,2,3-Triazolyl, 1,2,4-Triazolyl, 1,2,3-Oxadiazolyl, 1,2,4-Oxadiazolyl, 1,2,5-Oxadiazolyl, 1,3,4-Oxadiazolyl, 1,3,4-Triazinyl, 1,2,3-Triazinyl, Benzofuryl, Isobenzofuryl, Benzothienyl, Benzotriazolyl, Isobenzothienyl, Indolyl, Isoindolyl, 3H-Indolyl, Benzimidazolyl, Benzothiazolyl, Benzoxazolyl, Chinolizinyl, Chinazolinyl, Pthalazinyl, Chinoxalinyl, Cinnolinyl, Napthyridinyl, Chinolyl, Isochinolyl, Tetrazolyl, 5,6,7,8-Tetrahydrochinolyl, 5, 6, 7, 8-Tetrahydroisochinolyl, Purinyl, Pteridinyl, Pyridinyl, Pyrimidinyl, Carbazolyl, Xanthenyl oder Benzochinolyl. Heteroarylgruppen können substituiert oder unsubstituiert sein. Wenn sie substituiert sind, sind die Substituenten wie oben für Cycloalkyl definiert.

Ein "heteroalicyclischer Rest" oder eine "Heterocycloalkylgruppe", wie hierin verwendet, bezieht sich auf einen monocyclischen oder fusionierten Ring aus 5 bis 10 Ringatomen, der ein, zwei oder drei Heteroatome enthält, die aus N, O und S ausgewählt werden, wobei der Rest der Ringatome Kohlenstoff ist. Eine "Heterocycloalkenyl"-Gruppe enthält zusätzlich ein oder mehrere Doppelbindungen. Der Ring hat jedoch kein vollständiges konjugiertes pi-Elektronensystem. Beispiele für heteroalicyclische Gruppen sind Pyrrolidin, Piperidin, Piperazin, Morpholin, Imidazolidin, Tetrahydropyridazin, Tetrahydrofuran, Thiomorpholin, Tetrahydropyridin, und ähnliche. Heterocycloalkylgruppen können substituiert oder unsubstituiert sein. Wenn sie substituiert sind, sind die Substituenten wie oben für Cycloalkyl definiert.

In verschiedenen Ausführungsformen der Erfindung werden R¹, R² und R³ unabhängig voneinander ausgewählt aus Wasserstoff und einem substituierten oder unsubstituierten Alkylrest. Der Alkylrest ist insbesondere ein unsubstituierter C₁₋₄ Alkylrest, vorzugsweise Methyl oder Ethyl. In ganz besonders bevorzugten Ausführungsformen sind R¹ und R³ Methyl und R² ist Wasserstoff. Derartige Liganden sind darstellbar durch Umsetzen eines primären Amins mit Acetylaceton, wie unten im Detail beschrieben.

In verschiedenen Ausführungsformen können R¹ und R² oder R² und R³ zusammen mit den Kohlenstoffatomen, an die sie gebunden sind, einen 5-6-gliedrigen substituierten oder unsubstituierten cycloaliphatischen, heteroalicyclischen, Aryl- oder Heteroarylring bilden, insbesondere einen cycloaliphatischen oder heteroalicyclischen Ring.

In den Verbindungen der Formel (1) steht jedes X unabhängig für einen divalenten Rest, der ausgewählt wird aus:
einem substituierten oder unsubstituierten Alkyl-, Alkenyl- oder Alkinylrest;
einem substituierten oder unsubstituierten cycloaliphatischen Rest oder Arylrest;
einem substituierten oder unsubstituierten heteroalicyclischen Rest oder Heteroarylrest.

"Divalent", wie in diesem Zusammenhang verwendet, bedeutet, dass der Rest X zwei freie Bindungen aufweist, über welche er an -Yⁿ(R⁴)ₙ₋₁ bzw. -N=C(R³)-C(R²)=C(R¹)-O gebunden ist, wie z.B. Methylidenyl, Phenylidenyl, etc.

In verschiedenen Ausführungsformen der Erfindung ist X ein Alkylrest der Formel -(CHR')ₚ-, wobei jedes R' H oder ein C₁₋₄ Alkylrest ist und p eine ganze Zahl von 1 bis 10, insbesondere 1 bis 6, noch bevorzugter 1 bis 3 ist. In bestimmten Ausführungsformen ist X ein Alkylrest der Formel -(CH₂)ₚ-, wobei p eine ganze Zahl von 1 bis 6, insbesondere 3 ist.

In den Verbindungen der Formel (1) steht jedes Yⁿ unabhängig für C, Si, Ge, N, P, O, S, wobei n den Oxidationszustand oder die Valenz angibt. "Oxidationszustand" oder "Valenz", wie im Kontext mit Y verwendet, bezieht sich auf die Bindungen, die Y eingehen kann. So besitzen C und Si beispielsweise Valenzen von 4, wohingegen O und S eine Valenz von 2 besitzen. Ge besitzt eine Valenz von 2 oder 4, N und P von 3 oder 5. In verschiedenen Ausführungsformen der Erfindung ist jedes n daher unabhängig eine ganze Zahl von 1 bis 4, insbesondere 2, 3 oder 4.

In verschiedenen Ausführungsformen der Erfindung ist Yⁿ C, Si oder O, insbesondere C oder Si, noch bevorzugter Si.

In den Verbindungen der Formel (1) steht jedes R⁴ unabhängig für:
Wasserstoff;
einen substituierten oder unsubstituierten Alkyl-, Alkenyl- oder Alkinylrest;
einen substituierten oder unsubstituierten cycloaliphatischen Rest oder Arylrest;
einen substituierten oder unsubstituierten heteroalicyclischen Rest oder Heteroarylrest;
-OR⁵, -SR⁵, -N(R⁵)₂, -Si(R⁵)₃ oder -P(R⁵)₃; oder
zwei R⁴ bilden zusammen mit Yⁿ einen 5- bis 8-gliedrigen, substituierten oder unsubstituierten cycloaliphatischen, heteroalicyclischen, Aryl- oder Heteroarylring;
mit der Maßgabe, dass
   (1) wenn Yⁿ O oder S ist, R⁴ nicht -OR⁵, -SR⁵ oder -N(R⁵)₂ ist;
   (2) wenn Yⁿ Si, Ge oder P ist, R⁴ nicht H, -Si(R⁵)₃ oder -P(R⁵)₃ ist;

In verschiedenen Ausführungsformen ist R⁴ ausgewählt aus der Gruppe bestehend aus einem substituierten oder unsubstituierten Alkylrest, insbesondere mit 1 bis 10 Kohlenstoffatomen und -OR⁵.

In den Verbindungen der Formel (1) steht jedes R⁵ unabhängig für
Wasserstoff;
einen substituierten oder unsubstituierten Alkyl-, Alkenyl- oder Alkinylrest;
einen substituierten oder unsubstituierten cycloaliphatischen Rest oder Arylrest;
einen substituierten oder unsubstituierten heteroalicyclischen Rest oder Heteroarylrest.

In verschiedenen Ausführungsformen der Erfindung wird der Rest -Yⁿ(R⁴)ₙ₋₁ ausgewählt aus Silylgruppen, insbesondere Dialkylalkoxysilyl, Alkyldialkoxysilyl, Trialkoxysilyl, Trialkylsilyl, wobei Alkyl bzw. Alkoxy C₁₋₄ Alkyl bzw. Alkoxy sind. Ganz besonders bevorzugt sind Triethoxysilyl und Trimethoxysilyl.

Die Zinkkomplexe der Formel (1) sind darstellbar durch Umsetzen von Diorganozinkverbindungen, wie insbesondere Diethylzink, mit zwei Äquivalenten des Liganden der Formel (3) 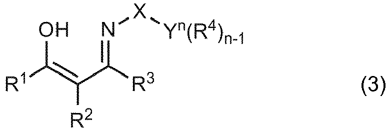 wobei R¹-R⁴, Yⁿ und n wie oben definiert sind, in einem geeigneten Lösungsmittel unter Schutzgas und in Abwesenheit von Wasser bei Raumtemperatur.

Die Liganden der Formel (3) sind darstellbar durch Umsetzen von 1,3-Dicarbonylverbindungen der Formel (4), insbesondere Acetylaceton, mit primären Aminen der Formel (5) 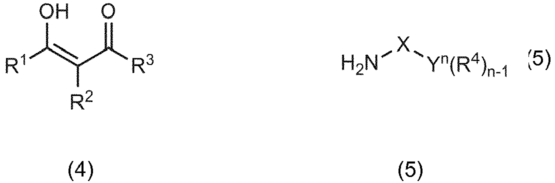 wobei R¹-R⁴, Yⁿ und n wie oben definiert sind, wie beispielsweise beschrieben in Lee et al. (Adv. Synth. Catal. 2009, 351, 2912-20) und Jin & Lee (Angew. Chem. Int. Ed. 2010, 49, 1119-1122).

In einem weiteren Aspekt betrifft die Erfindung Zusammensetzungen, die die erfindungsgemäßen Zinkkomplexe enthalten. Bei diesen Zusammensetzungen kann es sich beispielsweise um Katalysatorzusammensetzungen handeln. Diese können die Zinkverbindungen, wie hierin beschrieben, beispielsweise in Kombination mit weiteren aktiven Inhaltsstoffen oder Hilfsstoffen, wie z.B. Lösungsmitteln enthalten.

Die hierin beschriebenen Zinkverbindungen der Formel (1) sind insbesondere als Katalysatoren für die Funktionalisierung von Organopolysiloxanen mit endständigen Silanolgruppen mit Alkoxysilanen, die eine oder mehrere funktionelle Gruppen tragen, d.h. das sogenannte Endcapping, geeignet.

Die beschriebenen Zinkverbindungen sind bei Standardbedingungen (25°C, 1013 mbar) flüssige Verbindungen und daher hinsichtlich ihrer Aktivität und Effizienz bisher verwendeten festen Katalysatoren überlegen.

In verschiedenen Ausführungsformen betrifft die Erfindung daher auch ein Verfahren zur Herstellung eines härtbaren Polymers, insbesondere eines Polyorganosiloxans, enthaltend mindestens eine, an eine Siliziumatom gebundene, endständige funktionelle Gruppe, umfassend das Umsetzen eines Silanol-terminierten Polymers, insbesondere Polydiorganosiloxans, mit mindestens einer Verbindung der Formel (2)

(R¹⁰)ₖ(R¹¹)ₘSi(R¹²)₄₋₍ₖ₊ₘ₎ (2),

wobei
jedes R¹⁰ für einen Kohlenwasserstoffrest mit 1 bis 20 C-Atomen steht oder eine Triorganosiloxan-Gruppe der Formel -O-Si(R¹³)₃, wobei jedes R¹³ unabhängig für einen Kohlenwasserstoffrest mit 1 bis 20 C-Atomen steht;
jedes R¹¹ für eine funktionelle Gruppe der Formel -(L)ₙ-(F)ₒ steht, wobei L ein divalenter oder trivalenter Kohlenwasserstoffrest ist, der optional ein oder mehrere Heteroatome, insbesondere Sauerstoffatome enthält, F ein ungesättigter C₂₋₆ Kohlenwasserstoffrest, Halogen, ein perfluorierter Kohlenwasserstoffrest, Glycidoxy, -NHR¹⁴ oder -O-C(O)-CR¹⁵=CR¹⁶R¹⁷ ist, wobei R¹⁴ Wasserstoff, C₁₋₆ Alkyl oder L-NH₂ ist, R¹⁵, R¹⁶ und R¹⁷ unabhängig Wasserstoff, C₁₋₆ Alkyl oder Phenyl sind, n 0 oder 1 und o 1 oder 2 ist;
jedes R¹² unabhängig für eine Hydroxy- oder eine hydrolysierbare Gruppe stehen, insbesondere eine Oxim- oder/und Alkoxygruppe;
k 0, 1, 2 oder 3 ist;
m 0 oder 1 ist, wobei k+m = 0, 1, 2 oder 3 ist, mit der Maßgabe, dass wenn k+m=3 ist, m nicht 0 ist;
in Gegenwart eines Katalysators, wobei der Katalysator mindestens einen Zinkkomplex wie hierin definiert enthält.

Das härtbare Polymer ist vorzugsweise ein feuchtigkeitshärtbares Polymer. Das härtbare Polymer das mit den erfindungsgemäßen Verfahren herstellbar ist, enthält vorzugsweise endständige Alkoxysilylgruppen. Diese können optional mit Vinyl- und bevorzugt Acrylatfunktionalitäten oder Epoxyfunktionalitäten kombiniert werden, um eine doppelte Photo- und Feuchtigkeitsvernetzung zu erlauben. Ein solches Beispiel ist das Reaktionsprodukt aus Vinyltrimethoxysilan mit einem Polydimethylsiloxan mit endständigem Silanol in Gegenwart einer katalytischen Menge der hierin beschriebenen Zinkkatalysatoren.

Für das Polymergerüst des härtbaren Polymers gibt es keine besonderen Einschränkungen und es können alle bekannten Polymere mit verschiedenen Arten von Hauptkettengerüst verwendet werden. In verschiedenen Ausführungsformen ist das Polymer daher ausgewählt aus Alkydharzen, (Meth)Acrylaten und (Meth)Acrylamiden sowie deren Salzen, Phenolharzen, Polyalkylenen, Polyamiden, Polycarbonaten, Polyolen, Polyethern, Polyestern, Polyurethanen, Vinylpolymeren, Siloxanen sowie Copolymeren bestehend aus mindestens zwei der vorgenannten Polymerklassen. Besonders bevorzugt werden allerdings Siloxane und hier insbesondere Polydiorganosiloxane, noch bevorzugter Polydimethylsiloxane (PDMS) eingesetzt.

Die genannten Materialien werden dann im Folgenden durch Feuchtigkeitsvernetzung oder doppelte Feuchtigkeits- und Photovernetzung ausgehärtet.

Um ein härtbares Polymer mit endständigem Alkoxysilyl und optional Vinyl- oder Acrylatfunktionalität herzustellen, wird ein Silanol-terminiertes Polymer mit einem Silan, das mindestens zwei Alkoxygruppen und optional zusätzlich mindestens eine Epoxy-, Vinyl- oder Acrylatgruppe enthält, in Gegenwart einer katalytischen Menge der hierin beschriebenen Zinkverbindungen umgesetzt, wobei das Silan mit der endständigen Silanolgruppe durch eine Kondensationsreaktion zwischen der Hydroxylgruppe und einer Alkoxygruppe verknüpft wird, wodurch sich ein härtbares Polymer mit endständigem Alkoxysilyl und optional Epoxy-, Vinyl- oder Acrylatfunktionalität ergibt.

Das Silanol-terminierte Polymer weist mindestens eine terminal Silanolgruppe, vorzugsweise mindestens zwei terminale Silanolgruppen auf. Bei verzweigten Polymeren weist es bevorzugt an jedem Ende eine Silanolgruppe auf. "Silanolgruppe", wie hierin verwendet, bezieht sich auf die Gruppe Si-OH, d.h. eine Hydroxylgruppe, die direkt an ein Siliziumatom gebunden ist.

In den Verbindungen der Formel (2) wird R¹⁰ in verschiedenen Ausführungsformen ausgewählt aus Methyl, Ethyl und Phenyl, insbesondere Methyl.

In verschiedenen Ausführungsformen wird R¹¹ ausgewählt aus:
-CH=CH₂, -CH₂-Cl, -(CH₂)₃-Cl, -CH₂-O-C(O)-CH=CH₂, -CH₂-O-C(O)-C(CH₃)=CH₂, -(CH₂)₃-O-C(O)-CH=CH₂ , -(CH₂)₃-O-C(O)-C(CH₃)=CH₂, -(CH₂)₂-Phenyl-CH=CH₂ , -CH(CH₃)-Phenyl-CH=CH₂, -
(CH₂)₂-Phenyl-CH₂-Cl, -CH(CH₃)-Phenyl-CH₂-Cl -(CH₂)₃-NH₂, -(CH₂)₃-NH-(CH₂)₂-NH₂ und -(CH₂)₃-SH.

In verschiedenen Ausführungsformen ist R¹² ausgewählt aus Methoxy und Ethoxy. R¹² kann aber auch eine Oximgruppe sein. "Oximgruppen", wie hierin verwendet, schließt Ketoxime und Aldoxime ein und bezeichnet allgemein Gruppen, die die funktionelle Gruppe R'₂C=N-O- enthalten, wobei das Sauerstoffatom an das Siliziumatom gebunden ist und R' H oder jede andere Gruppe, vorzugsweise Alkylgruppe, sein kann.

In verschiedenen Ausführungsformen ist k 0, 1 oder 2, m ist 0 oder 1, und k+m = 0, 1 oder 2.

In bevorzugten Ausführungsformen steht R¹⁰ für Methyl, Ethyl oder Phenyl, insbesondere Methyl, R¹¹ steht für eine Gruppe ausgewählt aus:
-CH=CH₂, -CH₂-Cl, -(CH₂)₃-Cl, -CH₂-O-C(O)-CH=CH₂, -CH₂-O-C(O)-C(CH₃)=CH₂, -(CH₂)₃-O-C(O)-CH=CH₂ , -(CH₂)₃-O-C(O)-C(CH₃)=CH₂, -(CH₂)₂-Phenyl-CH=CH₂ , -CH(CH₃)-Phenyl-CH=CH₂, -
(CH₂)₂-Phenyl-CH₂-Cl, -CH(CH₃)-Phenyl-CH₂-Cl, -(CH₂)₃-NH₂, -(CH₂)₃-NH-(CH₂)₂-NH₂ und -(CH₂)₃-SH; R¹² ist ausgewählt aus Methoxy und Ethoxy; k ist 0, 1 oder 2, m ist 0 oder 1, und k+m = 0, 1 oder 2.

Die Verbindung der Formel (2) wird daher beispielsweise ausgewählt aus: Tetramethoxysilan, Tetraethoxysilan, Tetrapropoxysilan, Methyltrimethoxysilan, Methyltriethoxysilan, Propyltrimethoxysilan, Propyltriethoxysilan, Phenyltrimethoxysilan, Phenyltriethoxysilan, Vinyltrimethoxysilan, Vinyltriethoxysilan, 3-Chlorpropyltrimethoxysilan, [2-(o,m,p-Chlormethylphenyl)ethyl]trimethoxysilan und Mischungen davon, [1-(o,m,p-Chlormethylphenyl)ethyl]trimethoxysilan und Mischungen davon, 3-Aminopropyltrimethoxysilan, 3-Aminopropyltriethoxysilan, [3-(2-Aminoethyl)aminopropyl]trimethoxysilan, 3-Mercaptopropyltrimethoxysilan, 3-Methacryloxypropyltrimethoxysilan, 3-Acryloxypropyltrimethoxysilan, 3-Glycidoxypropyltriethoxysilan, 3-Glycidoxypropyltrimethoxysilan, und Mischungen der vorgenannten.

In den beschriebenen Verfahren wird die Verbindung der Formel (2) insbesondere in einer Menge eingesetzt, die sicherstellt, dass im Wesentlichen alle Silanol-Endgruppen verkappt werden. D.h. sie wird üblicherweise in Mengen eingesetzt, so dass das molare Verhältnis von Verbindung der Formel (2) zu Silanol-Endgruppen mindestens 1:1, vorzugsweise 1:1 bis 1,5:1 ist.

In den Verfahren wird das Silanol-terminierte Polymer typischerweise in Mengen von 30 bis 90 Gew.-%, die Verbindung der Formel (2) (Vernetzer) in Mengen von 2,5 bis 7 Gew.-% und der Zinkkatalysator in Mengen von 0,001 bis 1 Gew.-% eingesetzt.

Die mit den beschriebenen Verfahren erhältlichen härtbaren Polymere, die ebenfalls Gegenstand der Erfindung sind, können dann zu einer durch Feuchtigkeit vernetzbaren Zusammensetzung formuliert werden, die üblicherweise zusätzlich noch mindestens einen Feuchtigkeitsvernetzungskatalysator (Vulkanisationskatalysator), wie z.B. organische Zinn- oder Titanverbindungen oder einen Aminkatalysator, sowie optional verschiedene Zusatz- und Hilfsstoffe enthält. Ein weiterer Gegenstand der vorliegenden Erfindung ist daher auch eine Zubereitung, die die erfindungsgemäße härtbare Zusammensetzung enthält. Nach einer weiteren bevorzugten Ausführungsform der erfindungsgemäßen Zubereitung enthält diese ferner mindestens eine Verbindung ausgewählt aus der Gruppe umfassend Weichmacher, Stabilisatoren, Antioxidantien, Füllstoffe, Reaktivverdünner, Trockenmittel, Haftvermittler, UV-Stabilisatoren, rheologische Hilfsmittel und/oder Lösungsmittel. In solchen Zubereitungen kann die Menge des reaktiven, härtbaren Polymers a) 30 bis 90 Gew.-% bezogen auf das Gesamtgewicht der Zubereitung betragen. Die Menge an Vernetzungskatalysator c) kann 2,5 bis 7 Gew.-% bezogen auf das Gesamtgewicht der Zubereitung betragen. Haftvermittler können beispielsweise in Mengen von 0 bis 5 Gew.-% bezogen auf das Gesamtgewicht der Zubereitung eingesetzt werden.

Um härtbar zu sein, enthält das Polymer endständige Silizium-haltige Gruppen, in der eine eine hydrolysierbare Gruppe an das Siliziumatom gebunden ist, und die dazu in der Lage ist, durch Bildung einer Siloxanbindung zu vernetzen. Diese Vernetzungsreaktion kann durch einen Feuchtigkeitsvernetzungskatalysator beschleunigt werden. Die hydrolysierbare Gruppe des härtbaren Polymers ist, wie oben beschrieben, insbesondere eine Alkoxygruppe, optional in Kombination mit einer Epoxy-, Vinyl- oder (Meth)Acrylatgruppe.

Die hierin beschriebenen härtbaren Zusammensetzungen und Zubereitungen können als Kleb- und Dichtstoffe verwendet werden. Die derartige Verwendung ist ebenfalls Bestandteil der Erfindung.

Es ist denkbar, dass die Viskosität des erfindungsgemäßen Kleb- oder Dichtstoffs für bestimmte Anwendungen zu hoch ist. Diese kann man dann in der Regel durch Verwendung eines Reaktivverdünners auf einfache und zweckmäßige Weise verringern einstellen, ohne dass es zu Entmischungserscheinungen (z.B. Weichmacherwanderung) in der ausgehärteten Masse kommt.

Vorzugsweise weist der Reaktivverdünner mindestens eine funktionelle Gruppe auf, die nach der Applikation z.B. mit Feuchtigkeit oder Luftsauerstoff reagiert. Beispiele für derartige Gruppen sind Silylgruppen, Isocyanatgruppen, vinylisch ungesättigte Gruppen und mehrfach ungesättigte Systeme.

Als Reaktivverdünner kann man alle Verbindungen, die mit dem Kleb- oder Dichtstoff unter Verringerung der Viskosität mischbar sind und über mindestens eine mit dem Bindemittel reaktive Gruppe verfügen, einsetzen.

Die Viskosität des Reaktivverdünners beträgt bevorzugt weniger als 20.000 mPas, besonders bevorzugt etwa 0,1 - 6.000 mPas, ganz besonders bevorzugt 1 - 1000 mPas (Brookfield RVT, 23 °C, Spindel 7, 10 U/min).

Als Reaktivverdünner kann man z.B. folgende Stoffe einsetzen: mit Isocyanatosilanen umgesetzte Polyalkylenglykole (z.B. Synalox 100-50B, DOW), Carbamatopropyltrimethoxysilan, Alkyltrimethoxysilan, Alkyltriethoxysilan, wie Methyltrimethoxysilan, Methyltriethoxysilan sowie Vinyltrimethoxysilan (XL 10, Wacker), Vinyltriethoxysilan, Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan und Teilhydrolysate dieser Verbindungen.

Ferner sind ebenfalls folgende Polymere von Kaneka Corp. als Reaktivverdünner einsetzbar: MS S203H, MS S303H, MS SAT 010, und MS SAX 350.

Ebenso kann man silanmodifizierte Polyether verwenden, die sich z.B. aus der Umsetzung von Isocyanatosilan mit Synalox Typen ableiten.

Weiterhin kann man als Reaktivverdünner Polymere einsetzen, die aus einem organischen Grundgerüst durch Pfropfen mit einem Vinylsilan oder durch Umsetzung von Polyol, Polyisocyanat und Alkoxysilan herstellbar sind.

Unter einem Polyol wird eine Verbindung verstanden, die im Molekül eine oder mehrere OH - Gruppen enthalten kann. Die OH -Gruppen können sowohl primär als auch sekundär sein.

Zu den geeigneten aliphatischen Alkoholen zählen beispielsweise Ethylenglykol, Propylenglykol und höhere Glykole, sowie andere polyfunktionelle Alkohole. Die Polyole können zusätzlich weitere funktionelle Gruppen wie z.B. Ester, Carbonate, Amide enthalten.

Zur Herstellung der erfindungsgemäß bevorzugten Reaktivverdünner wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen bevorzugt.

Vorzugsweise weist die im Rahmen der vorliegenden Erfindung als Reaktivverdünner vorliegende Verbindung mindestens eine Alkoxysilylgruppe auf, wobei unter den Alkoxysilylgruppen die Di- und Trialkoxysilylgruppen bevorzugt sind.

Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate, in Frage.

Ebenso kann man als Polyisocyanate sind drei- oder höherwertige Isocyanate, wie sie beispielsweise durch Oligomerisierung von Diisocyanaten, insbesondere durch Oligomerisierung der oben genannten Isocyanate, erhältlich sind, einsetzen. Beispiele für solche drei- und höherwertigen Polyisocyanate sind die Tri-isocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Zur Reduzierung der Viskosität der erfindungsgemäßen Zubereitung lassen sich neben oder anstatt eines Reaktivverdünners auch Lösungsmittel und / oder Weichmacher einsetzen.

Als Lösungsmittel eignen sich aliphatische oder aromatische Kohlenwasserstoffe, halogenierte Kohlenwasserstoffe, Ketone, Ether, Ester, Esteralkohole, Ketoalkohole, Ketoether, Ketoester und Etherester.

Die hierin beschriebene Zubereitung kann ferner hydrophile Weichmacher enthalten. Diese dienen zur Verbesserung der Feuchtigkeitsaufnahme und damit zur Verbesserung der Reaktivität bei niedrigen Temperaturen. Als Weichmacher geeignet sind beispielsweise Ester der Abietinsäure, Adipinsäureester, Azelainsäureester, Benzoesäureester, Buttersäureester, Essigsäureester, Ester höherer Fettsäuren mit etwa 8 bis etwa 44 C-Atomen, epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon.

Beispielsweise eignen sich von den Phthalsäureestern Dioctylphthalat, Dibutylphthalat, Diisoundecylphthalat oder Butylbenzylphthalat, von den Adipaten Dioctyladipat, Diisodecyladipat, Diisodecylsuccinat, Dibutylsebacat oder Butyloleat.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

Ferner eignen sich als Weichmacher endgruppenverschlossene Polyethylenglykole. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Besonders bevorzugt als Weichmacher sind jedoch endgruppenverschlossene Polyethylenglykole, wie Polyethylen- oder Polypropylenglykoldialkylether, wobei der Alkylrest ein bis vier C-Atome beträgt, und insbesondere die Dimethyl- und Diethylether von Diethylenglykol und Dipropylenglykol. Insbesondere mit Dimethyldiethylenglykol wird eine auch unter ungünstigeren Auftragungsbedingungen (geringe Luftfeuchtigkeit, niedrige Temperatur) eine akzeptable Aushärtung erreicht. Für weitere Einzelheiten zu Weichmachern wird auf die einschlägige Literatur der Technischen Chemie verwiesen.

Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im Wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Die hierin beschriebene Zubereitung kann außerdem bis zu etwa 20 Gew.-% an üblichen Haftvermittlern (Tackifier) enthalten. Als Haftvermittler geeignet sind beispielsweise Harze, Terpen-Oligomere, Cumaron-/lnden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich *α*- oder *β*-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden beispielsweise auch Copolymere aus Terpenen und anderen Monomeren, beispielsweise Styrol, *α*-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Zusatzstoff im oben genannten Sinne geeignet sind die Kolophoniumharze und deren Derivate, beispielsweise deren Ester.

Ferner kann die hierin beschriebene Zubereitung weiterhin bis zu etwa 7 Gew.-%, insbesondere bis zu etwa 5 Gew.-% Antioxidantien enthalten.

Die hierin beschriebene Zubereitung kann bis zu etwa 2 Gew.-%, vorzugsweise etwa 1 Gew.-% an UV-Stabilisatoren enthalten. Als UV-Stabilisatoren besonders geeignet sind die sogenannten Hindered Amine Light Stabilisators (HALS). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden.

Häufig ist es sinnvoll, die erfindungsgemäßen Zubereitungen durch Trockenmittel weiter gegenüber eindringender Feuchtigkeit zu stabilisieren, um die Lagerbarkeit (shelf-life) noch weiter zu erhöhen.

Eine solche Verbesserung der Lagerbarkeit lässt sich beispielsweise durch den Einsatz von Trockenmitteln erreichen. Als Trockenmittel eignen sich alle Verbindungen, die mit Wasser unter Bildung einer gegenüber den in der Zubereitung vorliegenden reaktiven Gruppen inerten Gruppe reagieren, und hierbei möglichst geringe Veränderungen ihres Molekulargewichts eingehen. Weiterhin muss die Reaktivität der Trockenmittel gegenüber in die Zubereitung eingedrungener Feuchtigkeit höher sein, als die Reaktivität der Gruppen des in der Zubereitung vorliegenden erfindungsgemäßen silylgruppentragenden Polymers

Als Trockenmittel eignen sich beispielsweise Isocyanate.

Vorteilhafterweise werden als Trockenmittel Silane eingesetzt. Beispielsweise Vinylsilane wie 3-Vinylpropyltriethoxysilan, Oximsilane wie Methyl-O,O',O"-butan-2-on-trioximosilan oder O,O',Oʺ,O‴-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder -ethylethoxysilan ist möglich. Hinsichtlich Effizienz und Kosten sind hier Vinyltrimethoxysilan und Tetraethoxysilan besonders bevorzugt

Ebenfalls als Trockenmittel geeignet sind die oben genannten Reaktivverdünner, sofern sie ein Molekulargewicht (Mₙ) von weniger als etwa 5.000 g/mol aufweisen und über Endgruppen verfügen, deren Reaktivität gegenüber eingedrungener Feuchtigkeit mindestens genauso groß, bevorzugt größer ist, als die Reaktivität der reaktiven Gruppen des erfindungsgemäßen silylgruppentragenden Polymers.

Schließlich können als Trockenmittel auch Alkylorthoformiate oder -orthoacetate eingesetzt werden, bsw. Methyl- oder Ethylorthoformiat, Methyl- oder Ethylorthoacetat,
Die erfindungsgemäßen Kleb- und Dichtstoffe enthalten in der Regel etwa 0 bis etwa 6 Gew.-% Trockenmittel.

Die hierin beschriebene Zubereitung kann zusätzlich Füllstoffe enthalten. Hier eignen sich beispielsweise Kreide, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Sand, Quartz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Baumwolle, Hackschnitzel, Häcksel und Spreu. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet.

Die pyrogenen und/oder gefällten Kieselsäuren weisen vorteilhaft eine BET-Oberfläche von 10 bis 90 m²/g auf. Bei Ihrer Verwendung bewirken sie keine zusätzliche Erhöhung der Viskosität der erfindungsgemäßen Zubereitung, tragen aber zu einer Verstärkung der gehärteten Zubereitung bei.

Es ist ebenso denkbar, pyrogene und/oder gefällte Kieselsäuren mit einer höheren BET-Oberfläche, vorteilhafterweise mit 100 - 250 m²/g, insbesondere 110 - 170 m²/g, als Füllstoff einzusetzen. Aufgrund der höheren BET-Oberfläche, kann man den gleichen Effekt, z.B. Verstärkung der gehärteten Zubereitung, bei einem geringeren Gewichtsanteil Kieselsäure erzielen. Somit kann man weitere Stoffe einsetzen, um die hierin beschriebene Zubereitung hinsichtlich anderer Anforderungen zu verbessern.

Ferner eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles^{®} kommerziell erhältlich sind. Hohlkugeln auf Kunststoffbasis, z.B. Expancel^{®} oder Dualite^{®}, werden beispielsweise in der EP 0 520 426 B1 beschrieben. Diese sind aus anorganischen oder organischen Stoffen zusammengesetzt, jede mit einem Durchmesser von 1 mm oder weniger, bevorzugt von 500 µm oder weniger.

Für manche Anwendungen sind Füllstoffe bevorzugt, die den Zubereitungen Thixotropie verleihen. Solche Füllstoffe werden auch als rheologische Hilfsmittel beschrieben, z. B. hydrogenisiertes Rizinusöl, Fettsäureamide oder quellbare Kunststoffe wie PVC. Um gut aus einer geeigneten Dosiervorrichtung (z. B. Tube) auspressbar zu sein, besitzen solche Zubereitungen eine Viskosität von 3.000 bis 15.000, vorzugsweise 40.000 bis 80.000 mPas oder auch 50.000 bis 60.000 mPas.

Die Füllstoffe werden vorzugsweise in einer Menge von 1 bis 80 Gew.-% bezogen auf das Gesamtgewicht der Zubereitung eingesetzt.

Die Herstellung der Zubereitung erfolgt nach bekannten Verfahren durch inniges Vermischen der Bestandteile in geeigneten Dispergieraggregaten, z. B. einem Schnellmischer.

Die Zusammensetzung oder Zubereitung kann als Klebstoff, Dichtmasse, Spachtelmasse und zur Herstellung von Formteilen verwendet werden. Ein weiteres Anwendungsgebiet der Zusammensetzungen ist die Verwendung als Dübel-, Loch- oder Rissspachtelmasse.

Die Zusammensetzungen und Zubereitungen eignen sich also zum Verkleben von Kunststoffen, Metallen, Glas, Keramik, Holz, Holzwerkstoffen, Papier, Papierwerkstoffen, Gummi und Textilien, zum Verkleben von Fußböden, Abdichten von Bauwerksteilen, Fenstern, Wand- und Bodenbelägen sowie Fugen im allgemeinen. Hierbei können die Materialien jeweils mit sich selbst oder beliebig untereinander verklebt werden.

Die folgenden Beispiele dienen der Erläuterung der Erfindung, die Erfindung ist aber nicht darauf beschränkt.

### Beispiel 1: Herstellung des Zinkkomplexes

Frisch destilliertes Acetylaceton (26,0312 g, 260 mmol) wurde in 350 mL wasserfreiem Ethanol gelöst. Über einen Zeitraum von 60 Minuten wurden 55,342 g 3-Aminopropyltriethoxysilan zu der gerührten Lösung bei Raumtemperatur zugetropft. Die Mischung wurde über Nacht unter Rückfluss erhitzt, um die Vollständigkeit der Reaktion sicherzustellen. Der Fortschritt der Reaktion wurde mittels GC-MS überwacht. Das Lösungsmittel und der Überschuss an Acetylaceton wurden dann unter vermindertem Druck entfernt. Der Rückstand wurde bei 10⁻³ mbar und 130°C destilliert, wobei das Produkt C als eine leicht gelbliche Flüssigkeit erhalten wurde (Ausbeute 67-75%), die mittels ¹H, ¹³C, ¹³C-DEPT und ²⁹Si-NMR, Elementaranalyse, IR-Spektroskopie und GC-MS charakterisiert wurde.

Diethylzink wurde als 1M Lösung in Hexan verwendet. Toluol wurde über Natrium/Benzophenon getrocknet und unter Inertbedingungen destilliert.

Unter Argonatmosphäre und Ausschluss von Wasser wurde Produkt C (9,104 g, 30 mmol) in einen Schlenkkolben eingewogen und in 100 mL getrocknetem Toluol gelöst. 15 mL einer 1 M Diethylzink-Lösung in Hexan wurden über 15 Minuten bei Raumtemperatur zugegeben. Nach der Zugabe wurde die Lösung für 1 h unter Rückfluss erhitzt. Der Fortschritt der Reaktion kann anhand des entstehenden Ethangases mittels eines Gasblasenzählers verfolgt werden. Die Reaktion ist abgeschlossen wenn kein Ethangas mehr beobachtet werden kann. Nach dem Abkühlen wurde das Lösungsmittel unter reduziertem Druck entfernt und das Produkt bei 120°C unter Hochvakuum bei 10⁻³ mbar getrocknet. Das Produkt wurde als leicht gelbliche Flüssigkeit mit einer Ausbeute von etwa 80% erhalten und mittels ¹H, ¹³C, ¹³C-DEPT und ²⁹Si-NMR, Elementaranalyse und IR-Spektroskopie charakterisiert.

### Beispiel 2: Herstellung eines Zinkkomplex-katalysierten Vinyldimethoxysilyl-terminierten Polydimethylsiloxans

Ein 1,5 I Mischer ausgerüstet mit einem mechanischen Rührwerk, Heiz-/Kühl-Möglichkeit und einem Thermometer wurde mit 5,4 mmol eines α,ω-Hydroxyl-terminierten Polydimethylsiloxans (Viskosität: 80000 mPas) beladen. Die Flüssigkeit wurde auf 50°C erhitzt und mit Stickstoff entgast. Dann wurden 0,17 mmol des Zinkkatalysators aus Beispiel 1 zugegeben. Nach 3 Minuten Rühren wurden 142,6 mmol Vinyltrimethoxysilan zugesetzt. Die Mischung wurde für 30 Minuten bei 50°C unter Stickstoff gehalten und dann für mehrere Minuten bei 50°C unter Vakuum entgast, um alle flüchtigen Komponenten zu entfernen und Vinyldimethoxysilyl-terminiertes Polydimethylsiloxan zu erhalten.

### Beispiel 3 (Vergleichsbeispiel): Herstellung eines Lithiummethanolat-katalysierten Vinyldimethoxysilyl-terminierten Polydimethylsiloxans

Ein 1,5 I Mischer ausgerüstet mit einem mechanischen Rührwerk, Heiz-/Kühl-Möglichkeit und einem Thermometer wurde mit 5,4 mmol eines α,ω-Hydroxyl-terminierten Polydimethylsiloxans (Viskosität: 80000 mPas) beladen. Die Flüssigkeit wurde auf 50°C erhitzt und mit Stickstoff entgast. Dann wurden 2,7 mmol Lithiummethanolat zugegeben. Nach 3 Minuten Rühren wurden 142,6 mmol Vinyltrimethoxysilan zugesetzt. Die Mischung wurde für 30 Minuten bei 50°C unter Stickstoff gehalten und dann für mehrere Minuten bei 50°C unter Vakuum entgast, um alle flüchtigen Komponenten zu entfernen und Vinyldimethoxysilyl-terminiertes Polydimethylsiloxan zu erhalten.

### Beispiel 4 (Vergleichsbeispiel): Herstellung eines gestoppten Lithiummethanolat-katalysierten Vinyldimethoxysilyl-terminierten Polydimethylsiloxans

Ein 1,5 I Mischer ausgerüstet mit einem mechanischen Rührwerk, Heiz-/Kühl-Möglichkeit und einem Thermometer wurde mit 5,4 mmol eines α,ω-Hydroxyl-terminierten Polydimethylsiloxans (Viskosität: 80000 mPas) beladen. Die Flüssigkeit wurde auf 50°C erhitzt und mit Stickstoff entgast. Dann wurden 2,7 mmol Lithiummethanolat zugegeben. Nach 3 Minuten Rühren wurden 142,6 mmol Vinyltrimethoxysilan zugesetzt. Die Mischung wurde für 30 Minuten bei 50°C unter Stickstoff gehalten. Der Katalysator wurde dann durch Verwendung von Trockeneis inaktiviert und die Mischung danach für mehrere Minuten bei 50°C unter Vakuum entgast, um alle flüchtigen Komponenten zu entfernen und Vinyldimethoxysilyl-terminiertes Polydimethylsiloxan zu erhalten.

### Beispiel 5: Stabilitätsexperiment

Um die Stabilität des Präpolymers aus den Beispielen 2-4 zu testen wurde die Viskosität des verkappten Polymers bei Raumtemperatur und bei 70°C über die Zeit bestimmt. Die Ergebnisse sind in Tabelle 1 dargestellt.

**Tabelle 1: Viskositätsmessungen (in mPas)**

| | Beispiel 2 | | Beispiel 3 | | Beispiel 4 | |
|---|---|---|---|---|---|---|
| Wochen | Raumtemperatur | 70°C | Raumtemperatur | 70°C | Raumtemperatur | 70°C |
| 1 | 76200 | 70000 | 82800 | 30000 | 55600 | 50600 |
| 4 | 75300 | 61200 | 53200 | 7000 | 57200 | 32600 |
| 6 | 74600 | 55000 | 49200 | 5400 | 57000 | 29400 |

### Beispiel 6: Härtbare Silikonzusammensetzung

Die Mischungen aus den Beispielen 2-4 wurden verwendet, um eine härtbare Silikonzusammensetzung gemäß Tabelle 2 zu formulieren.

**Tabelle 2**

| Bestandteil | Gew.-% |
|---|---|
| Präpolymer | 37 |
| Weichmacher (100 mPas) | 11 |
| Pyrogene Kieselsäure | 5,5 |
| Gecoatete Kreide (Omya BLP3) | 42 |
| Vulkanisationskatalysator (Tetra-n-butyl-titanat) | 1,5 |
| Vinyltrimethoxysilan (Trocknungsmittel) | 3 |

Die hergestellten Formulierungen wurden hinsichtlich Härtungsgeschwindigkeit, Hautbildungszeit, Härte, Dehnbarkeit und Dehnung untersucht. Alle Tests wurden für das frisch formulierte Silikon und nach 3 und 6 Wochen Alterung bei 40°C/80% Luftfeuchtigkeit bzw. 50°C durchgeführt. Die Ergebnisse sind in Tabelle 3 dargestellt.

**Tabelle 3: Mechanische Eigenschaften**

| | Formulierung mit Präpolymer aus Bsp. 2 | Formulierung mit Präpolymer aus Bsp. 3 | Formulierung mit Präpolymer aus Bsp. 4 |
|---|---|---|---|
| Shore A 1d/7d | | | |
| Frisch | 30/35 | 31/31 | 28/35 |
| 3 Wochen gealtert | 25/37 | 7/32 | 7/34 |
| 6 Wochen gealtert | 15/25 | 4/15 | 7/16 |
| | | | |
| Hautbildungszeit (min) | | | |
| Frisch | 10 | 8 | 10 |
| 3 Wochen gealtert | 15 | 37 | 26 |
| 6 Wochen gealtert | 15 | 20 | 15 |
| | | | |
| Durchhärtungsvolumen (mm/24h) | | | |
| Frisch | 1,8 | 1,6 | 1,5 |
| 3 Wochen gealtert | 1,5 | 2,9 | 2,1 |
| 6 Wochen gealtert | 1,3 | 3,3 | 2,8 |
| | | | |
| F-max (Dehnbarkeit; N/mm²) | | | |
| Frisch | 1,7 | 1,3 | 1,5 |
| 3 Wochen gealtert | 1,4 | 1,0 | 1,4 |
| 6 Wochen gealtert | 1,2 | 0,7 | 1,0 |
| | | | |
| Dehnbarkeit beim Bruch (%) | | | |
| Frisch | 503 | 405 | 483 |
| 3 Wochen gealtert | 509 | 493 | 570 |
| 6 Wochen gealtert | 519 | 462 | 496 |

### Messung der Hautbildungszeit

Die Bestimmung der Hautbildungszeit erfolgt im Normalklima (23 +/- 2 °C, relative Luftfeuchte 50 +/- 5 %). Die Temperatur des Dichtstoffes muss 23+/-2°C betragen, der Dichtstoff ist mindestens 24h im Labor vorzulagern. Der Dichtstoff wird auf ein Blatt Papier aufgebracht und mit einem Ziehspachtel zu einem Fell ausgezogen (Dicke ca. 2 mm, Breite ca. 7 cm). Stoppuhr sofort starten. In Intervallen die Oberfläche leicht mit der Fingerspitze berühren und Finger wieder wegziehen - so stark auf die Oberfläche drücken, dass ein Abdruck auf der Oberfläche bei Erreichen der Hautbildungzeit verbleibt. Die Hautbildungszeit ist erreicht, wenn keine Dichtmasse mehr an der Fingerspitze haften bleibt. Die Hautbildungszeit wird in Minuten angegeben.

### Messung der Shore A Härte

Die Durchführung erfolgt gemäß an ISO 868.

### Messung der Härtungstiefe

Ein Dichtstoffstrang mit einer Höhe von 10 mm (+/- 1 mm) und einer Breite von 20 mm (+/- 2 mm) wird mit einem entsprechenden Spachtel auf ein Kunststoffkartenblatt appliziert. Nach einer Lagerung von 24 Stunden bei Normalklima (23 +/- 2 °C, relative Luftfeuchte 50 +/- 5 %), wird ein Stück aus dem Strang herausgeschnitten und die Dicke der ausgehärteten Schicht mit einer Schieblehre gemessen. Die Härtungstiefe wird in [mm / 24 h] angegeben.

### Messung der mechanischen Eigenschaften (Zugversuch)

Mit dem Zugversuch werden die Bruchkraft, Bruchdehnung und Dehnspannungswerte (E-Module) in Anlehnung an DIN 53504 ermittelt.

Abweichung zur Norm: Als Probekörper werden Schulterstäbe mit folgenden Dimensionen verwendet: Dicke: 2 +/- 0.2 mm; Breite des Stegs: 10 +/- 0,5 mm; Länge des Stegs: ca. 45 mm; Gesamtlänge: 9 cm. Die Prüfung erfolgt bei im Normklima (23 +/- 2 °C, 50 +/- 5 % rel. Luftfeuchtigkeit). Die Prüfung erfolgt nach 7 Tagen Aushärtung.

Durchführung: Von der Dichtmasse wird ein 2mm dicker Film ausgezogen. Der Film wird für 7 Tage im Normklima gelagert und dann die Schulterstäbe herausgestanzt. Für jede Bestimmung sind je drei Schulterstäbe herzustellen. Die Prüfung ist im Normklima durchzuführen. Die Prüflinge sind müssen vorher mindestens 20 Minuten an die Prüftemperatur angeglichen (d.h. gelagert) werden. Vor der Messung ist die Dicke der Probekörper an mindestens 3 Stellen bei RT mit einer Schieblehre zu messen, d.h. bei den Schulterstäben sind innerhalb der Anfangsmesslänge vorzugsweise die Enden und die Mitte zu vermessen. Bei elastischen Materialien empfiehlt es sich zusätzlich noch quer über den Steg. Der Mittelwert ist in das Messprogramm einzugeben. Die Probekörper sind so in die Zugprüfmaschine einzuspannen, so dass die Längsachse mit der mechanischen Achse der Zugprüfmaschine übereinstimmt und eine möglichst große Fläche der Stabköpfe erfasst wird, ohne dass der Steg eingeklemmt wird. Mit einer Vorschubgeschwindigkeit von 50mm/min wir der Schulterstab auf eine Vorspannung von <0,1 MPa gespannt. Dann erfolgt die Aufnahme der Kraft-Längenänderungskurve mit einer Vorschubgeschwindigkeit von 50 mm/min. Auswertung: Folgende Werte sind der Messung zu entnehmen: Bruchkraft in [N/mm²], Bruchdehnung in [%] und E-Modul bei 100% Dehnung in [N/mm²].

Die Ergebnisse zeigen, dass mit dem erfindungsgemäße Katalysator signifikant höhere und stabilere Shore A Härten sowie vergleichbare mechanische Eigenschaften wie mit den Lithiumbasierten Verbindungen vor und nach der Alterung erreichbar sind, sowie stabilere Hautbildungszeiten.

## Patentansprüche

1. Verfahren zur Herstellung eines härtbaren Polymers, insbesondere eines Polyorganosiloxans, enthaltend mindestens eine, an eine Siliziumatom gebundene, endständige funktionelle Gruppe, umfassend das Umsetzen eines Silanol-terminierten Polymers, insbesondere Polydiorganosiloxans, mit mindestens einer Verbindung der Formel (2)
(R¹⁰)ₖ(R¹¹)ₘSi(R¹²)₄₋₍ₖ₊ₘ₎ (2),
wobei
jedes R¹⁰ für einen Kohlenwasserstoffrest mit 1 bis 20 C-Atomen steht oder eine Triorganosiloxan-Gruppe der Formel -O-Si(R¹³)₃, wobei jedes R¹³ unabhängig für einen Kohlenwasserstoffrest mit 1 bis 20 C-Atomen steht;
jedes R¹¹ für eine funktionelle Gruppe der Formel -(L)ₙ-(F)ₒ steht, wobei L ein divalenter oder trivalenter Kohlenwasserstoffrest ist, der optional ein oder mehrere Heteroatome, insbesondere Sauerstoffatome enthält, F ein ungesättigter C₂₋₆ Kohlenwasserstoffrest, Halogen, ein perfluorierter Kohlenwasserstoffrest, Glycidoxy, -NHR¹⁴ oder -O-C(O)-CR¹⁵=CR¹⁶R¹⁷ ist, wobei R¹⁴ Wasserstoff, C₁₋₆ Alkyl oder L-NH₂ ist, R¹⁵, R¹⁶ und R¹⁷ unabhängig Wasserstoff, C₁₋₆ Alkyl oder Phenyl sind, n 0 oder 1 und o 1 oder 2 ist;
jedes R¹² unabhängig für eine Hydroxy- oder eine hydrolysierbare Gruppe stehen, insbesondere eine Oxim- oder/und Alkoxygruppe;
k 0, 1, 2 oder 3 ist;
m 0 oder 1 ist, wobei k+m = 0, 1, 2 oder 3 ist, mit der Maßgabe, dass wenn k+m=3 ist, m nicht 0 ist;
in Gegenwart eines Katalysators, wobei der Katalysator mindestens einen Zinkkomplex der Formel (1) enthält: 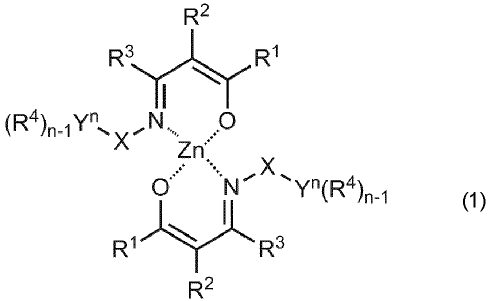
wobei
jedes R¹, R² und R³ unabhängig steht für:
Wasserstoff;
einen substituierten oder unsubstituierten Alkyl-, Alkenyl- oder Alkinylrest;
einen substituierten oder unsubstituierten cycloaliphatischen Rest oder Arylrest;
einen substituierten oder unsubstituierten heteroalicyclischen Rest oder Heteroarylrest;
-OR⁵, -SR⁵, -N(R⁵)₂, -Si(R⁵)₃ oder-P(R⁵)₃;
oder R¹ und R² oder R² und R³ zusammen mit den Kohlenstoffatomen, an die sie gebunden sind, einen 5- bis 8-gliedrigen, substituierten oder unsubstituierten cycloaliphatischen, heteroalicyclischen, Aryl- oder Heteroarylring bilden;
jedes X unabhängig für einen divalenten Rest steht, der ausgewählt wird aus:
einem substituierten oder unsubstituierten Alkyl-, Alkenyl- oder Alkinylrest;
einem substituierten oder unsubstituierten cycloaliphatischen Rest oder Arylrest;
einem substituierten oder unsubstituierten heteroalicyclischen Rest oder Heteroarylrest;
jedes Yⁿ unabhängig steht für C, Si, Ge, N, P, O, S, wobei n den Oxidationszustand oder die Valenz angibt;
jedes R⁴ unabhängig steht für:
Wasserstoff;
einen substituierten oder unsubstituierten Alkyl-, Alkenyl- oder Alkinylrest;
einen substituierten oder unsubstituierten cycloaliphatischen Rest oder Arylrest;
einen substituierten oder unsubstituierten heteroalicyclischen Rest oder Heteroarylrest; oder
-OR⁵, -SR⁵, -N(R⁵)₂, -Si(R⁵)₃ oder -P(R⁵)₃; oder
zwei R⁴ zusammen mit Yⁿ einen 5- bis 8-gliedrigen, substituierten oder unsubstituierten cycloaliphatischen, heteroalicyclischen, Aryl- oder Heteroarylring bilden
mit der Maßgabe, dass
(1) wenn Yⁿ O oder S ist, R⁴ nicht -OR⁵, -SR⁵ oder -N(R⁵)₂ ist;
(2) wenn Yⁿ Si, Ge oder P ist, R⁴ nicht H, -Si(R⁵)₃ oder -P(R⁵)₃ ist;
jedes R⁵ unabhängig steht für
Wasserstoff;
einen substituierten oder unsubstituierten Alkyl-, Alkenyl- oder Alkinylrest;
einen substituierten oder unsubstituierten cycloaliphatischen Rest oder Arylrest;
einen substituierten oder unsubstituierten heteroalicyclischen Rest oder Heteroarylrest; und
jedes n unabhängig eine ganze Zahl von 1 bis 4, insbesondere 2, 3 oder 4 ist,
wobei substituierter Alkyl-, Alkenyl- oder Alkinylrest bedeutet, dass ein oder mehrere Kohlenstoffatom(e) und/oder Wasserstoffatom(e) des Alkyl-, Alkenyl- oder Alkinylrests durch Heteroatome, ausgewählt aus O, S, N und Si, oder funktionelle Gruppen ausgewählt aus =O, =S, -OH, -SH, -NH₂ -NO₂, -CN, -F, -Cl, -Br, -I, -OCN, -NCO, C₃₋₈ Cycloalkyl, C₆₋₁₄ Aryl, einem 5-10 gliedrigen Heteroarylring, in dem 1 bis 4 Ringatome unabhängig Stickstoff, Sauerstoff oder Schwefel sind, und einem 5-10 gliedrigen heteroalicyclischen Ring, in dem 1 bis 3 Ringatome unabhängig Stickstoff, Sauerstoff oder Schwefel sind, ersetzt sind; und
substituierter cycloaliphatischer Rest, Arylrest, heteroalicyclischer Rest oder Heteroarylrest bedeutet, dass ein oder mehrere Wasserstoffatom(e) des cycloaliphatischen Rests, Arylrests, heteroalicyclischen Rests oder Heteroarylrests durch funktionelle Gruppen, ausgewählt aus =O, =S, -OH, -SH, -NH₂ -NO₂, -CN, -F, -Cl, -Br, -I, -OCN, -NCO, C₁₋₁₀ Alkyl, C₂₋₁₀ Alkenyl, C₂₋₁₀ Alkinyl, C₃₋₈ Cycloalkyl, C₆₋₁₄ Aryl, einem 5-10 gliedrigen Heteroarylring in dem 1 bis 4 Ringatome unabhängig Stickstoff, Sauerstoff oder Schwefel sind, und einem 5-10 gliedrigen heteroalicyclischen Ring in dem 1 bis 3 Ringatome unabhängig Stickstoff, Sauerstoff oder Schwefel sind, ersetzt sind.

2. Verfahren gemäß Anspruch 1, **dadurch gekennzeichnet, dass** R¹, R² und R³ ausgewählt werden aus Wasserstoff und einem substituierten oder unsubstituierten Alkylrest, insbesondere R¹ und R³ Methyl sind und R² Wasserstoff ist.

3. Verfahren gemäß Anspruch 1 oder 2, **dadurch gekennzeichnet, dass** X ein Alkylrest der Formel -(CH₂)ₚ- ist, wobei p eine ganze Zahl von 1 bis 6, insbesondere 3 ist.

4. Verfahren gemäß einem der Ansprüche 1 bis 3, **dadurch gekennzeichnet, dass** Yⁿ Si ist.

5. Verfahren gemäß Anspruch 4, **dadurch gekennzeichnet, dass** R⁴ -OR⁵ ist, wobei R⁵ C₁₋₄-Alkyl, insbesondere Methyl oder Ethyl ist.

6. Verwendung eines Zinkkomplexes der Formel (1) als Katalysator zur Katalyse der Kondensationsreaktion von Organosiliziumverbindungen: 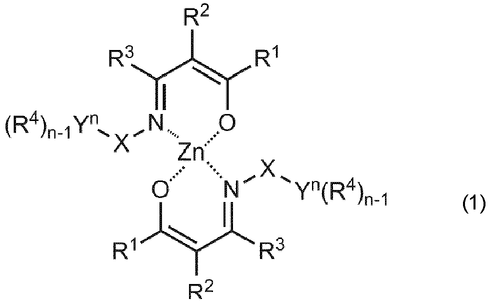 wobei
jedes R¹, R² und R³ unabhängig steht für:
Wasserstoff;
einen substituierten oder unsubstituierten Alkyl-, Alkenyl- oder Alkinylrest;
einen substituierten oder unsubstituierten cycloaliphatischen Rest oder Arylrest;
einen substituierten oder unsubstituierten heteroalicyclischen Rest oder Heteroarylrest;
-OR⁵, -SR⁵, -N(R⁵)₂, -Si(R⁵)₃ oder -P(R⁵)₃;
oder R¹ und R² oder R² und R³ zusammen mit den Kohlenstoffatomen, an die sie gebunden sind, einen 5- bis 8-gliedrigen, substituierten oder unsubstituierten cycloaliphatischen, heteroalicyclischen, Aryl- oder Heteroarylring bilden;
jedes X unabhängig für einen divalenten Rest steht, der ausgewählt wird aus:
einem substituierten oder unsubstituierten Alkyl-, Alkenyl- oder Alkinylrest;
einem substituierten oder unsubstituierten cycloaliphatischen Rest oder Arylrest;
einem substituierten oder unsubstituierten heteroalicyclischen Rest oder Heteroarylrest;
jedes Yⁿ unabhängig steht für C, Si, Ge, N, P, O, S, wobei n den Oxidationszustand oder die Valenz angibt;
jedes R⁴ unabhängig steht für:
Wasserstoff;
einen substituierten oder unsubstituierten Alkyl-, Alkenyl- oder Alkinylrest;
einen substituierten oder unsubstituierten cycloaliphatischen Rest oder Arylrest;
einen substituierten oder unsubstituierten heteroalicyclischen Rest oder Heteroarylrest; oder
-OR⁵, -SR⁵, -N(R⁵)₂, -Si(R⁵)₃ oder -P(R⁵)₃; oder
zwei R⁴ zusammen mit Yⁿ einen 5- bis 8-gliedrigen, substituierten oder unsubstituierten cycloaliphatischen, heteroalicyclischen, Aryl- oder Heteroarylring bilden
mit der Maßgabe, dass
(1) wenn Yⁿ O oder S ist, R⁴ nicht -OR⁵, -SR⁵ oder -N(R⁵)₂ ist;
(2) wenn Yⁿ Si, Ge oder P ist, R⁴ nicht H, -Si(R⁵)3 oder -P(R⁵)₃ ist;
jedes R⁵ unabhängig steht für
Wasserstoff;
einen substituierten oder unsubstituierten Alkyl-, Alkenyl- oder Alkinylrest;
einen substituierten oder unsubstituierten cycloaliphatischen Rest oder Arylrest;
einen substituierten oder unsubstituierten heteroalicyclischen Rest oder Heteroarylrest; und
jedes n unabhängig eine ganze Zahl von 1 bis 4, insbesondere 2, 3 oder 4 ist,
wobei substituierter Alkyl-, Alkenyl- oder Alkinylrest bedeutet, dass ein oder mehrere Kohlenstoffatom(e) und/oder Wasserstoffatom(e) des Alkyl-, Alkenyl- oder Alkinylrests durch Heteroatome, ausgewählt aus O, S, N und Si, oder funktionelle Gruppen ausgewählt aus =O, =S, -OH, -SH, -NH₂ -NO₂, -CN, -F, -Cl, -Br, -I, -OCN, -NCO, C₃₋₈ Cycloalkyl, C₆₋₁₄ Aryl, einem 5-10 gliedrigen Heteroarylring, in dem 1 bis 4 Ringatome unabhängig Stickstoff, Sauerstoff oder Schwefel sind, und einem 5-10 gliedrigen heteroalicyclischen Ring, in dem 1 bis 3 Ringatome unabhängig Stickstoff, Sauerstoff oder Schwefel sind, ersetzt sind; und
substituierter cycloaliphatischer Rest, Arylrest, heteroalicyclischer Rest oder Heteroarylrest bedeutet, dass ein oder mehrere Wasserstoffatom(e) des cycloaliphatischen Rests, Arylrests, heteroalicyclischen Rests oder Heteroarylrests durch funktionelle Gruppen, ausgewählt aus =O, =S, -OH, -SH, -NH₂ -NO₂, -CN, -F, -Cl, -Br, -I, -OCN, -NCO, C₁₋₁₀ Alkyl, C₂₋₁₀ Alkenyl, C₂₋₁₀ Alkinyl, C₃₋₈ Cycloalkyl, C₆₋₁₄ Aryl, einem 5-10 gliedrigen Heteroarylring in dem 1 bis 4 Ringatome unabhängig Stickstoff, Sauerstoff oder Schwefel sind, und einem 5-10 gliedrigen heteroalicyclischen Ring in dem 1 bis 3 Ringatome unabhängig Stickstoff, Sauerstoff oder Schwefel sind, ersetzt sind.

7. Verwendung gemäß Anspruch 6, **dadurch gekennzeichnet, dass** die katalysierte Reaktion die Endgruppen-Verkappung eines Silanol-terminierten Polymers mit mindestens einer Verbindung der Formel (2)
(R⁵)ₖ(R⁶)ₘSi(R⁷)₄₋₍ₖ₊ₘ₎ (2),
wobei
jedes R⁵ für einen Kohlenwasserstoffrest mit 1 bis 20 C-Atomen steht oder eine Triorganosiloxan-Gruppe der Formel -O-Si(R⁸)₃, wobei jedes R⁸ unabhängig für einen Kohlenwasserstoffrest mit 1 bis 20 C-Atomen steht;
jedes R⁶ für eine funktionelle Gruppe der Formel -(L)ₙ-(F)ₒ steht, wobei L ein divalenter oder trivalenter Kohlenwasserstoffrest ist, der optional ein oder mehrere Heteroatome, insbesondere Sauerstoffatome enthält, F ein ungesättigter C₂₋₆ Kohlenwasserstoffrest, Halogen, ein perfluorierter Kohlenwasserstoffrest, -NHR⁹ oder -O-C(O)-CR¹⁰=CR¹¹R¹² ist, wobei R⁹ Wasserstoff, C₁₋₆ Alkyl oder L-NH₂ ist, R¹⁰, R¹¹ und R¹² unabhängig Wasserstoff, C₁₋₆ Alkyl oder Phenyl sind, n 0 oder 1 und o 1 oder 2 ist;
jedes R⁷ unabhängig für eine Hydroxy- oder eine hydrolysierbare Gruppe stehen, insbesondere eine Oxim- oder/und Alkoxygruppe;
k 0, 1, 2 oder 3 ist;
m 0 oder 1 ist, wobei k+m = 0, 1, 2 oder 3 ist, mit der Maßgabe, dass wenn k+m=3 ist, m nicht 0 ist; ist.

## Claims

1. Process for preparing a curable polymer, in particular a polyorganosiloxane, containing at least one terminal functional group bonded to a silicon atom, comprising reacting a silanol-terminated polymer, in particular polydiorganosiloxane, with at least one compound of formula (2)
(R¹⁰)ₖ(R¹¹)ₘSi(R¹²)₄₋₍ₖ₊ₘ₎ (2),
where
each R¹⁰ represents a hydrocarbon group having 1 to 20 carbon atoms or a triorganosiloxane group of the formula -O-Si(R¹³)₃, where each R¹³ independently represents a hydrocarbon group having 1 to 20 carbon atoms;
each R¹¹ represents a functional group of the formula -(L)ₙ-(F)ₒ, where L is a divalent or trivalent hydrocarbon group optionally containing one or more heteroatoms, in particular oxygen atoms, F is an unsaturated C₂₋₆ hydrocarbon group, halogen, a perfluorinated hydrocarbon group, glycidoxy, -NHR¹⁴ or -OC(O)-CR¹⁵=CR¹⁶R¹⁷, where R¹⁴ is hydrogen, C₁₋₆ alkyl or L-NH₂, R¹⁵, R¹⁶ and R¹⁷ are independently hydrogen, C₁₋₆ alkyl or phenyl, n is 0 or 1 and o is 1 or 2;
each R¹² independently represents a hydroxy or a hydrolysable group, in particular an oxime and/or alkoxy group;
k is 0, 1, 2 or 3;
m is 0 or 1, where k+m = 0, 1, 2 or 3, with the proviso that when k+m=3, m is not 0; in the presence of a catalyst, wherein the catalyst contains at least one zinc complex of formula (1): 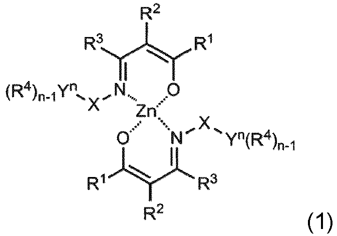 where
each R¹, R² and R³ independently represents:
hydrogen;
a substituted or unsubstituted alkyl, alkenyl or alkynyl group;
a substituted or unsubstituted cycloaliphatic group or aryl group;
a substituted or unsubstituted heteroalicyclic group or heteroaryl group;
-OR⁵, -SR⁵, -N(R⁵)₂, -Si(R⁵)₃ or -P(R⁵)₃;
or R¹ and R² or R² and R³ together with the carbon atoms to which they are bonded form a 5 to 8 membered substituted or unsubstituted cycloaliphatic, heteroalicyclic, aryl or heteroaryl ring;
each X independently represents a divalent group selected from:
a substituted or unsubstituted alkyl, alkenyl or alkynyl group;
a substituted or unsubstituted cycloaliphatic group or aryl group;
a substituted or unsubstituted heteroalicyclic group or heteroaryl group;
each Yⁿ independently represents C, Si, Ge, N, P, O, S, where n indicates the oxidation state or valence;
each R⁴ independently represents:
hydrogen;
a substituted or unsubstituted alkyl, alkenyl or alkynyl group;
a substituted or unsubstituted cycloaliphatic group or aryl group;
a substituted or unsubstituted heteroalicyclic group or heteroaryl group; or
-OR⁵, -SR⁵, -N(R⁵)₂, -Si(R⁵)₃ or -P(R⁵)₃; or
two R⁴ together with Yⁿ form a 5 to 8 membered substituted or unsubstituted cycloaliphatic, heteroalicyclic, aryl or heteroaryl ring
with the proviso that
(1) when Yⁿ is O or S, R⁴ is not -OR⁵, -SR⁵ or -N(R⁵)₂;
(2) when Yⁿ is Si, Ge or P, R⁴ is not H, -Si(R⁵)₃ or -P(R⁵)₃;
each R⁵ independently represents
hydrogen;
a substituted or unsubstituted alkyl, alkenyl or alkynyl group;
a substituted or unsubstituted cycloaliphatic group or aryl group;
a substituted or unsubstituted heteroalicyclic group or heteroaryl group; and
each n is independently an integer from 1 to 4, in particular 2, 3 or 4,
where substituted alkyl, alkenyl or alkynyl group means that one or more carbon atom(s) and/or hydrogen atom(s) of the alkyl, alkenyl or alkynyl group are replaced by heteroatoms selected from O, S, N and Si, or functional groups selected from =O, =S, - OH, -SH, -NH₂ -NO₂, -CN, -F, -CI, -Br, -I, -OCN, -NCO, C₃₋₈ cycloalkyl, C₆₋₁₄ aryl, a 5-10 membered heteroaryl ring in which 1 to 4 ring atoms are independently nitrogen, oxygen or sulfur, and a 5-10 membered heteroalicyclic ring in which 1 to 3 ring atoms are independently nitrogen, oxygen or sulfur; and
substituted cycloaliphatic group, aryl group, heteroalicyclic group or heteroaryl group means that one or more hydrogen atom(s) of the cycloaliphatic group, aryl group, heteroalicyclic group or heteroaryl group are substituted by functional groups, selected from =O, =S, -OH, -SH, -NH₂ -NO₂, -CN, -F, -CI, -Br, -I, -OCN, -NCO, C₁₋₁₀ alkyl, C₂₋₁₀ alkenyl, C₂₋₁₀ alkynyl, C₃₋₈ cycloalkyl, C₆₋₁₄ aryl, a 5-10 membered heteroaryl ring in which 1 to 4 ring atoms are independently nitrogen, oxygen or sulfur, and a 5-10 membered heteroalicyclic ring in which 1 to 3 ring atoms are independently nitrogen, oxygen or sulfur.

2. Process according to claim 1, **characterized in that** R¹, R² and R³ are selected from hydrogen and a substituted or unsubstituted alkyl group, in particular R¹ and R³ are methyl and R² is hydrogen.

3. Process according to claim 1 or 2, **characterized in that** X is an alkyl group of the formula - (CH₂)ₚ-, where p is an integer from 1 to 6, in particular 3.

4. Process according to one of claims 1 to 3, **characterized in that** Yⁿ is Si.

5. Process according to claim 4, **characterized in that** R⁴ is -OR⁵, where R⁵ is C₁₋₄ alkyl, in particular methyl or ethyl.

6. Use of a zinc complex of formula (1) as a catalyst for catalyzing the condensation reaction of organosilicon compounds: 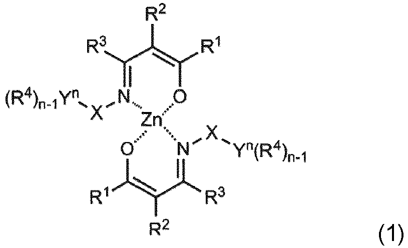 where
each R¹, R² and R³ independently represents:
hydrogen;
a substituted or unsubstituted alkyl, alkenyl or alkynyl group;
a substituted or unsubstituted cycloaliphatic group or aryl group;
a substituted or unsubstituted heteroalicyclic group or heteroaryl group;
-OR⁵, -SR⁵, -N(R⁵)₂, -Si(R⁵)₃ or -P(R⁵)₃;
or R¹ and R² or R² and R³ together with the carbon atoms to which they are bonded form a 5 to 8 membered substituted or unsubstituted cycloaliphatic, heteroalicyclic, aryl or heteroaryl ring;
each X independently represents a divalent group selected from:
a substituted or unsubstituted alkyl, alkenyl or alkynyl group;
a substituted or unsubstituted cycloaliphatic group or aryl group;
a substituted or unsubstituted heteroalicyclic group or heteroaryl group;
each Yⁿ independently represents C, Si, Ge, N, P, O, S, where n indicates the oxidation state or valence;
each R⁴ independently represents:
hydrogen;
a substituted or unsubstituted alkyl, alkenyl or alkynyl group;
a substituted or unsubstituted cycloaliphatic group or aryl group;
a substituted or unsubstituted heteroalicyclic group or heteroaryl group; or
-OR⁵, -SR⁵, -N(R⁵)₂, -Si(R⁵)₃ or -P(R⁵)₃; or
two R⁴ together with Yⁿ form a 5 to 8 membered substituted or unsubstituted cycloaliphatic, heteroalicyclic, aryl or heteroaryl ring
with the proviso that
(1) when Yⁿ is O or S, R⁴ is not -OR⁵, -SR⁵ or -N(R⁵)₂;
(2) when Yⁿ is Si, Ge or P, R⁴ is not H, -Si(R⁵)₃ or -P(R⁵)₃;
each R⁵ independently represents
hydrogen;
a substituted or unsubstituted alkyl, alkenyl or alkynyl group;
a substituted or unsubstituted cycloaliphatic group or aryl group;
a substituted or unsubstituted heteroalicyclic group or heteroaryl group; and
each n is independently an integer from 1 to 4, in particular 2, 3 or 4,
where substituted alkyl, alkenyl or alkynyl group means that one or more carbon atom(s) and/or hydrogen atom(s) of the alkyl, alkenyl or alkynyl group are replaced by heteroatoms selected from O, S, N and Si, or functional groups selected from =O, =S, - OH, -SH, -NH₂ -NO₂, -CN, -F, -CI, -Br, -I, -OCN, -NCO, C₃₋₈ cycloalkyl, C₆₋₁₄ aryl, a 5-10 membered heteroaryl ring in which 1 to 4 ring atoms are independently nitrogen, oxygen or sulfur, and a 5-10 membered heteroalicyclic ring in which 1 to 3 ring atoms are independently nitrogen, oxygen or sulfur; and
substituted cycloaliphatic group, aryl group, heteroalicyclic group or heteroaryl group means that one or more hydrogen atom(s) of the cycloaliphatic group, aryl group, heteroalicyclic group or heteroaryl group are substituted by functional groups, selected from =O, =S, -OH, -SH, -NH₂ -NO₂, -CN, -F, -CI, -Br, -I, -OCN, -NCO, C₁₋₁₀ alkyl, C₂₋₁₀ alkenyl, C₂₋₁₀ alkynyl, C₃₋₈ cycloalkyl, C₆₋₁₄ aryl, a 5-10 membered heteroaryl ring in which 1 to 4 ring atoms are independently nitrogen, oxygen or sulfur, and a 5-10 membered heteroalicyclic ring in which 1 to 3 ring atoms are independently nitrogen, oxygen or sulfur.

7. Use according to claim 6, **characterized in that** the catalyzed reaction involves the endcapping of a silanol-terminated polymer with at least one compound of formula (2)
(R⁵)ₖ(R⁶)ₘSi(R⁷)₄₋₍ₖ₊ₘ₎ (2),
where
each R⁵ represents a hydrocarbon group having 1 to 20 carbon atoms or a triorganosiloxane group of the formula -O-Si(R⁸)₃ where each R⁸ independently represents a hydrocarbon group having 1 to 20 carbon atoms;
each R⁶ represents a functional group of the formula -(L)ₙ-(F)ₒ where L is a divalent or trivalent hydrocarbon group optionally containing one or more heteroatoms, in particular oxygen atoms, F is an unsaturated C₂₋₆ hydrocarbon group, halogen, a perfluorinated hydrocarbon group, -NHR⁹ or -OC(O)-CR¹⁰=CR¹¹R¹²,
where R⁹ is hydrogen, C₁₋₆ alkyl or L-NH₂, R¹⁰, R¹¹ and R¹² are independently hydrogen, C₁₋₆ alkyl or phenyl, n is 0 or 1 and o is 1 or 2;
each R⁷ independently represents a hydroxy or a hydrolyzable group, in particular an oxime or/and alkoxy group;
k is 0, 1, 2 or 3;
m is 0 or 1, where k+m = 0, 1, 2 or 3, with the proviso that when k+m=3, m is not 0.

## Revendications

1. Procédé de préparation d'un polymère durcissable, en particulier d'un polyorganosiloxane, contenant au moins un groupe fonctionnel terminal lié à un atome de silicium, comprenant la réaction d'un polymère à terminaison silanol, en particulier d'un polydiorganosiloxane, comportant au moins un composé de formule (2)
(R¹⁰)ₖ(R¹¹)ₘSi(R¹²)₄₋₍ₖ₊ₘ₎ (2),
où
chaque R¹⁰ représente un radical hydrocarboné comportant 1 à 20 atomes de carbone ou un groupe triorganosiloxane de formule -O-Si(R¹³)₃, où chaque R¹³ représente indépendamment un radical hydrocarboné de 1 à 20 atomes de carbone ;
chaque R¹¹ représente un groupe fonctionnel de formule -(L)ₙ-(F)ₒ, où L représente un radical hydrocarboné divalent ou trivalent contenant éventuellement un ou plusieurs hétéroatomes, en particulier des atomes d'oxygène, F représente un radical hydrocarboné insaturé en C₂₋₆, un halogène, un radical hydrocarboné perfluoré, un glycidoxy, -NHR¹⁴ ou -O-C(O)-CR¹⁵=CR¹⁶R¹⁷, où R¹⁴ représente de l'hydrogène, un alkyle en C₁₋₆ ou L-NH₂, R¹⁵, R¹⁶ et R¹⁷ représentent indépendamment de l'hydrogène, un alkyle en C₁₋₆ ou un phényle, n représente 0 ou 1 et o représente 1 ou 2 ;
chaque R¹² représente indépendamment un groupe hydroxy ou hydrolysable, en particulier un groupe oxime et/ou alcoxy ;
k représente 0, 1, 2 ou 3 ;
m représente 0 ou 1, où k + m = 0, 1, 2 ou 3, à condition que lorsque k + m = 3, m ne représente pas 0 ;
en présence d'un catalyseur, le catalyseur contenant au moins un complexe de zinc de formule (1) : 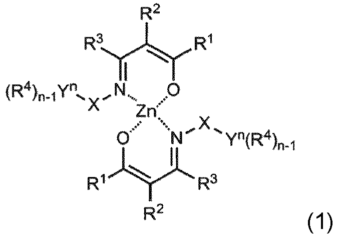 où
chaque R¹, R² et R³ représente indépendamment :
de l'hydrogène ;
un radical alkyle, alcényle ou alcynyle substitué ou non substitué ;
un radical aryle ou radical cycloaliphatique substitué ou non substitué ;
un radical hétéroaryle ou radical hétéroalicyclique substitué ou non substitué ;
-OR⁵, -SR⁵, -N(R⁵)₂, -Si(R⁵)₃ ou -P(R⁵)₃ ;
ou R¹ et R² ou R² et R³, conjointement avec les atomes de carbone auxquels ils sont liés, forment un cycle cycloaliphatique, hétéroalicyclique, aryle ou hétéroaryle, à 5 à 8 chaînons, substitué ou non substitué ;
chaque X représente indépendamment un radical divalent choisi parmi :
un radical alkyle, alcényle ou alcynyle substitué ou non substitué ;
un radical aryle ou radical cycloaliphatique substitué ou non substitué ;
un radical hétéroaryle ou radical hétéroalicyclique substitué ou non substitué ;
chaque Yⁿ représente indépendamment C, Si, Ge, N, P, O, S, où n indique l'état d'oxydation ou la valence ;
chaque R⁴ représente indépendamment :
de l'hydrogène ;
un radical alkyle, alcényle ou alcynyle substitué ou non substitué ;
un radical aryle ou radical cycloaliphatique substitué ou non substitué ;
un radical hétéroaryle ou radical hétéroalicyclique substitué ou non substitué ; ou
-OR⁵, -SR⁵, -N(R⁵)₂, -Si(R⁵)₃ ou -P(R⁵)₃ ; ou
deux R⁴, conjointement avec Yⁿ, forment un cycle cycloaliphatique, hétéroalicyclique, aryle ou hétéroaryle, à 5 à 8 chaînons, substitué ou non substitué
à condition que
(1) lorsque Yⁿ représente O ou S, R⁴ ne représente pas -OR⁵, -SR⁵ ou -N(R⁵)₂ ;
(2) lorsque Yⁿ représente Si, Ge ou P, R⁴ ne représente pas H, -Si(R⁵)₃ ou -P(R⁵)₃ ;
chaque R⁵ représente indépendamment
de l'hydrogène ;
un radical alkyle, alcényle ou alcynyle substitué ou non substitué ;
un radical aryle ou radical cycloaliphatique substitué ou non substitué ;
un radical hétéroaryle ou radical hétéroalicyclique substitué ou non substitué ; et chaque n représente indépendamment un nombre entier de 1 à 4, en particulier 2, 3 ou 4, où un radical alkyle, alcényle ou alcynyle substitué signifie qu'un ou plusieurs atomes de carbone et/ou atomes d'hydrogène du radical alkyle, alcényle ou alcynyle sont substitués par des hétéroatomes choisis parmi O, S, N et Si, ou des groupes fonctionnels choisis parmi =O, =S, -OH, -SH, -NH₂ -NO₂, -CN, -F, -Cl, -Br, -I, -OCN, -NCO, un cycloalkyle en C₃₋₈, un aryle en C₆₋₁₄, un cycle hétéroaryle à 5 à 10 chaînons dans lequel se trouvent 1 à 4 atomes de cycle indépendamment de l'azote, de l'oxygène ou du soufre et un cycle hétéroalicyclique à 5 à 10 chaînons dans lequel se trouvent 1 à 3 atomes de cycle indépendamment de l'azote, de l'oxygène ou du soufre ; et
un radical cycloaliphatique, un radical aryle, un radical hétéroalicyclique ou un radical hétéroaryle substitué signifie qu'un ou plusieurs atomes d'hydrogène du radical cycloaliphatique, du radical aryle, du radical hétéroalicyclique ou du radical hétéroaryle sont substitués par des groupes fonctionnels choisis parmi =O, =S, -OH, -SH, -NH₂ -NO₂, -CN, -F, -Cl, -Br, -I, -OCN, -NCO, un alkyle en C₁₋₁₀, un alcényle en C₂₋₁₀, un alcynyle en C₂₋₁₀, un cycloalkyle en C₃₋₈, un aryle en C₆₋₁₄, un cycle hétéroaryle à 5 à 10 chaînons dans lequel se trouvent 1 à 4 atomes de cycle indépendamment de l'azote, de l'oxygène ou du soufre, et un cycle hétéroalicyclique à 5 à 10 chaînons dans lequel se trouvent 1 à 3 atomes de cycle indépendamment de l'azote, de l'oxygène ou du soufre.

2. Procédé selon la revendication 1, **caractérisé en ce que** R¹, R² et R³ sont choisis parmi l'hydrogène et un radical alkyle substitué ou non substitué, en particulier R¹ et R³ représentent le méthyle et R² représente l'hydrogène.

3. Procédé selon la revendication 1 ou 2, **caractérisé en ce que** X représente un radical alkyle de formule -(CH₂)ₚ-, où p représente un nombre entier de 1 à 6, en particulier 3.

4. Procédé selon l'une des revendications 1 à 3, **caractérisé en ce que** Yⁿ représente Si.

5. Procédé selon la revendication 4, **caractérisé en ce que** R⁴ représente -OR⁵, où R⁵ représente un alkyle en C₁₋₄, en particulier le méthyle ou l'éthyle.

6. Utilisation d'un complexe de zinc de formule (1) comme catalyseur pour la catalyse de la réaction de condensation de composés organosiliciés : 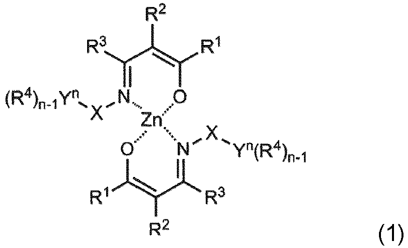 où
chaque R¹, R² et R³ représente indépendamment :
de l'hydrogène ;
un radical alkyle, alcényle ou alcynyle substitué ou non substitué ;
un radical aryle ou radical cycloaliphatique substitué ou non substitué ;
un radical hétéroaryle ou radical hétéroalicyclique substitué ou non substitué ;
-OR⁵, -SR⁵, -N(R⁵)₂, -Si(R⁵)₃ ou -P(R⁵)₃ ;
ou R¹ et R² ou R² et R³, conjointement avec les atomes de carbone auxquels ils sont liés, forment un cycle cycloaliphatique, hétéroalicyclique, aryle ou hétéroaryle, à 5 à 8 chaînons, substitué ou non substitué ;
chaque X représente indépendamment un radical divalent choisi parmi :
un radical alkyle, alcényle ou alcynyle substitué ou non substitué ;
un radical aryle ou radical cycloaliphatique substitué ou non substitué ;
un radical hétéroaryle ou radical hétéroalicyclique substitué ou non substitué ;
chaque Yⁿ représente indépendamment C, Si, Ge, N, P, O, S, où n indique l'état d'oxydation ou la valence ;
chaque R⁴ représente indépendamment :
de l'hydrogène ;
un radical alkyle, alcényle ou alcynyle substitué ou non substitué ;
un radical aryle ou radical cycloaliphatique substitué ou non substitué ;
un radical hétéroaryle ou radical hétéroalicyclique substitué ou non substitué ; ou
-OR⁵, -SR⁵, -N(R⁵)₂, -Si(R⁵)₃ ou -P(R⁵)₃ ; ou
deux R⁴, conjointement avec Yⁿ, forment un cycle cycloaliphatique, hétéroalicyclique, aryle ou hétéroaryle, à 5 à 8 chaînons, substitué ou non substitué
à condition que
(1) lorsque Yⁿ représente O ou S, R⁴ ne représente pas -OR⁵, -SR⁵ ou -N(R⁵)₂ ;
(2) lorsque Yⁿ représente Si, Ge ou P, R⁴ ne représente pas H, -Si(R⁵)₃ ou -P(R⁵)₃ ;
chaque R⁵ représente indépendamment
de l'hydrogène ;
un radical alkyle, alcényle ou alcynyle substitué ou non substitué ;
un radical aryle ou radical cycloaliphatique substitué ou non substitué ;
un radical hétéroaryle ou radical hétéroalicyclique substitué ou non substitué ; et chaque n représente indépendamment un nombre entier de 1 à 4, en particulier 2, 3 ou 4, où un radical alkyle, alcényle ou alcynyle substitué signifie qu'un ou plusieurs atomes de carbone et/ou atomes d'hydrogène du radical alkyle, alcényle ou alcynyle sont substitués par des hétéroatomes choisis parmi O, S, N et Si, ou des groupes fonctionnels choisis parmi =O, =S, -OH, -SH, -NH₂ -NO₂, -CN, -F, -Cl, -Br, -I, -OCN, -NCO, un cycloalkyle en C₃₋₈, un aryle en C₆₋₁₄, un cycle hétéroaryle à 5 à 10 chaînons dans lequel se trouvent 1 à 4 atomes de cycle indépendamment de l'azote, de l'oxygène ou du soufre et un cycle hétéroalicyclique à 5 à 10 chaînons dans lequel se trouvent 1 à 3 atomes de cycle indépendamment de l'azote, de l'oxygène ou du soufre ; et
un radical cycloaliphatique, un radical aryle, un radical hétéroalicyclique ou un radical hétéroaryle substitué signifie qu'un ou plusieurs atomes d'hydrogène du radical cycloaliphatique, du radical aryle, du radical hétéroalicyclique ou du radical hétéroaryle sont substitués par des groupes fonctionnels choisis parmi =O, =S, -OH, -SH, -NH₂ -NO₂, -CN, -F, -Cl, -Br, -I, -OCN, -NCO, un alkyle en C₁₋₁₀, un alcényle en C₂₋₁₀, un alcynyle en C₂₋₁₀, un cycloalkyle en C₃₋₈, un aryle en C₆₋₁₄, un cycle hétéroaryle à 5 à 10 chaînons dans lequel se trouvent 1 à 4 atomes de cycle indépendamment de l'azote, de l'oxygène ou du soufre, et un cycle hétéroalicyclique à 5 à 10 chaînons dans lequel se trouvent 1 à 3 atomes de cycle indépendamment de l'azote, de l'oxygène ou du soufre.

7. Utilisation selon la revendication 6, **caractérisée en ce que** la réaction catalysée est le coiffage de groupes terminaux d'un polymère à terminaison silanol avec au moins un composé de formule (2)
(R⁵)ₖ(R⁶)ₘSi(R⁷)₄₋₍ₖ₊ₘ₎ (2),
où
chaque R⁵ représente un radical hydrocarboné comportant 1 à 20 atomes de carbone ou un groupe triorganosiloxane de formule -O-Si(R⁸)₃, où chaque R⁸ représente indépendamment un radical hydrocarboné comportant 1 à 20 atomes de carbone ; chaque R⁶ représente un groupe fonctionnel de formule -(L)ₙ-(F)ₒ, où L représente un radical hydrocarboné divalent ou trivalent contenant éventuellement un ou plusieurs hétéroatomes, en particulier des atomes d'oxygène, F représente un radical hydrocarboné en C₂₋₆ insaturé, un halogène, un radical hydrocarboné perfluoré, -NHR⁹ ou -O-C(O)-CR¹⁰=CR¹¹R¹²,
où R⁹ représente hydrogène, un alkyle en C₁₋₆ ou L-NH₂, R¹⁰, R¹¹ et R¹² représentent indépendamment hydrogène, un alkyle en C₁₋₆ ou un phényle, n représente 0 ou 1 et o représente 1 ou 2 ;
chaque R⁷ représente indépendamment un groupe hydroxy ou hydrolysable, en particulier un groupe oxime ou/et alcoxy ;
k représente 0, 1, 2 ou 3 ;
m représente 0 ou 1, où k + m = 0, 1, 2 ou 3, à condition que lorsque k + m = 3, m ne représente pas 0.
